(19) Europäisches Patentamt
European Patent Office
Office européen des brevets

(11) **EP 4 319 245 A1**

(12) **EUROPEAN PATENT APPLICATION**
published in accordance with Art. 153(4) EPC

(43) Date of publication:
**07.02.2024 Bulletin 2024/06**

(21) Application number: **22803852.7**

(22) Date of filing: **11.05.2022**

(51) International Patent Classification (IPC):
***H04W 24/00*** (2009.01)

(52) Cooperative Patent Classification (CPC):
**H04W 24/00; H04W 24/02; H04W 24/08**

(86) International application number:
**PCT/CN2022/092285**

(87) International publication number:
**WO 2022/242530 (24.11.2022 Gazette 2022/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.05.2021 CN 202110541055**

(71) Applicant: **Huawei Technologies Co., Ltd.
Shenzhen, Guangdong 518129 (CN)**

(72) Inventors:
• **WANG, Qi
Shenzhen, Guangdong 518129 (CN)**
• **YAN, Qi
Shenzhen, Guangdong 518129 (CN)**
• **JIANG, Ruituo
Shenzhen, Guangdong 518129 (CN)**
• **WANG, Nanbin
Shenzhen, Guangdong 518129 (CN)**

(74) Representative: **Gill Jennings & Every LLP
The Broadgate Tower
20 Primrose Street
London EC2A 2ES (GB)**

(54) **METHOD AND APPARATUS FOR DETERMINING TRAFFIC COUNTING RESULT**

(57) This application provides a method and apparatus for determining a traffic statistics result. The method includes: A first server obtains a first data set, where the first data set includes a plurality of pieces of data collected within a first time period, and each piece of data includes a traffic measurement value and level measurement values of n beams. The first server determines, based on the level measurement values of the n beams of each piece of data and center coordinates of a first grid, a second data set associated with the first grid in the first data set, and determines, based on a traffic measurement value included in each piece of data in the second data set, uplink traffic or downlink traffic corresponding to the first grid in the first time period. The center coordinates of the first grid are represented by level values of n beams. A traffic statistics result of user traffic determined according to the method is a traffic statistics result at a grid-level time period granularity.

Step 501: A first server obtains a first data set, where the first data set includes a plurality of pieces of data collected within a first time period, and each piece of data includes a traffic measurement value and level measurement values of n beams

Step 502: The first server determines, based on the level measurement values of the n beams of each piece of data and center coordinates of a first grid, a second data set associated with the first grid in the first data set

Step 503: The first server determines, based on a traffic measurement value included in each piece of data in the second data set, uplink traffic or downlink traffic corresponding to the first grid in the first time period

FIG. 5

**Description**

**CROSS-REFERENCE TO RELATED APPLICATIONS**

This application claims priority to Chinese Patent Application No. 202110541055.3, filed with the China National Intellectual Property Administration on May 18, 2021 and entitled "METHOD AND APPARATUS FOR DETERMINING TRAFFIC STATISTICS RESULT", which is incorporated herein by reference in its entirety.

**TECHNICAL FIELD**

Embodiments of this application relate to the mobile communication field, and in particular, to a method and apparatus for determining a traffic statistics result.

**BACKGROUND**

With completion of initial construction of 5G wireless networks, 5G mobile user experience guarantee is increasingly important. Because network structures and new network features are more complex, the phenomenon of uneven user distribution is more evident, and there are ever-increasing diversified service types, it is difficult to optimally guarantee user experience through local network optimization.

Currently, large-scale network optimization is a trend of future network optimization. To support a large-scale wireless network optimization solution, spatial-temporal distribution of traffic statistics results needs to be obtained, in other words, traffic statistics results in a specific spatial area within a period of time need to be obtained.

**SUMMARY**

Embodiments of this application provide a method and apparatus for determining a traffic statistics result, to obtain spatial-temporal distribution of traffic statistics results.

According to a first aspect, an embodiment of this application provides a method for determining a traffic statistics result. A first server is used as an example of an execution body, and the method includes: The first server obtains a first data set, where the first data set includes a plurality of pieces of data collected within a first time period, and each piece of data includes a traffic measurement value and level measurement values of n beams. The traffic measurement value includes an uplink traffic measurement value and/or a downlink traffic measurement value. The first server determines, based on the level measurement values of the n beams of each piece of data and center coordinates of a first grid, a second data set associated with the first grid in the first data set, and determines, based on a traffic measurement value included in each piece of data in the second data set, uplink traffic or downlink traffic corresponding to the first grid in the first time period. The center coordinates of the first grid are represented by level values of n beams.

According to the foregoing embodiment, the first server determines data associated with the first grid in the first data set, to obtain the second data set, and then determines, based on level measurement values included in each second data set in the second data set, a traffic statistics result corresponding to the first grid in the first time period. The traffic statistics result determined according to the foregoing method is a traffic statistics result at a grid-level time period granularity, and may further provide a basis for subsequent traffic optimization.

In a possible design, when determining the second data set associated with the first grid in the first data set, the first server determines any piece of data in the first data set as data in the second data set when a distance between level measurement values of n beams included in the data and the center coordinates of the first grid is less than or equal to a radius of the first grid. A distance between level measurement values of n beams included in any piece of data included in the second data set and the center coordinates of the first grid is less than or equal to the radius of the first grid. Alternatively, the first server determines any piece of data in the first data set as data in the second data set when a distance between level measurement values of n beams included in the data and the center coordinates of the first grid is less than a distance between the level measurement values of the n beams and center coordinates of a grid other than the first grid in a plurality of grids. A distance between level measurement values of n beams included in any piece of data included in the second data set and the center coordinates of the first grid is less than a distance between the level measurement values of the n beams and the center coordinates of the grid other than the first grid in the plurality of grids.

In the foregoing design, the data that is in the first data set and that belongs to the second data set may be determined.

In a possible design, it is determined that the distance between the level measurement values of the n beams included in the any piece of data in the first data set and the center coordinates of the first grid is less than or equal to the radius of the first grid, and a distance between the level measurement values of the n beams included in the data and center coordinates of a second grid is less than or equal to a radius of the second grid, where the second grid is a grid other than the first grid in the plurality of grids. The data is determined as data in the second data set when the distance between the level measurement values of the n beams included in the data and the center coordinates of the first grid is less than the distance between the level measurement values of the n beams included in the data and the center coordinates of the second grid.

In the foregoing design, the data that is in the first data set and that belongs to the second data set may be determined.

In a possible design, the method further includes: obtaining center coordinates and a radius that correspond to each of the plurality of grids in n-dimensional beam space, where the plurality of grids include the first grid. According to the foregoing method, information about the plurality of grids in the n-dimensional beam space may be obtained. It may be understood that the information about the plurality of grids may be determined by the first server, or the information about the plurality of grids may be determined by another device and notified to the first server. This is not limited in this embodiment of this application.

In a possible design, when obtaining the center coordinates corresponding to each of the plurality of grids in the n-dimensional beam space, the first server obtains a training data set, where the training data set includes a plurality of samples, and each sample includes level measurement values of n beams; obtains, based on the level measurement values of the n beams corresponding to each of the plurality of samples, a distance set corresponding to the training data set; determines, based on the distance set corresponding to the training data set, a sample corresponding to each of the plurality of grids; and determines, based on the sample corresponding to each grid, the center coordinates corresponding to each grid. The distance set corresponding to the training data set includes a distance between any two groups of level measurement values of n beams in groups of level measurement values of n beams corresponding to the plurality of samples, and a distance between groups of level measurement values of n beams included in any two samples corresponding to each grid meets a preset distance condition. The center coordinates of the first grid are determined based on a sample corresponding to the first grid. According to the foregoing method, a grid to which each sample in the training set belongs is first determined, and center coordinates of each grid may be further determined based on a sample corresponding to the grid. The solution is simple and easy to implement. In addition, a traffic statistics result corresponding to each grid can be obtained during traffic statistics collection, and this facilitates subsequent traffic optimization based on the traffic statistics result.

In a possible design, when obtaining the center coordinates corresponding to each of the plurality of grids in the n-dimensional beam space, the first server obtains a training data set, where the training data set includes a plurality of samples, and each sample includes a traffic measurement value and level measurement values of n beams; obtains, based on the level measurement values of the n beams corresponding to each of the plurality of samples, a distance set corresponding to the training data set; determines, based on the distance set corresponding to the training data set, a sample corresponding to each of a plurality of candidate grids; determines, based on a traffic measurement value included in each sample corresponding to each candidate grid, a traffic statistics value corresponding to each of the plurality of candidate grids; determines, based on the traffic statistics value corresponding to each of the plurality of candidate grids, candidate grids that meet a preset traffic condition, and uses the candidate grids that meet the preset traffic condition as the plurality of grids in the n-dimensional beam space; and determines, based on a sample corresponding to each of the plurality of grids, the center coordinates corresponding to each grid, where the center coordinates of the first grid are determined based on a sample corresponding to the first grid. The distance set corresponding to the training data set includes a distance between any two groups of level measurement values of n beams in groups of level measurement values of n beams corresponding to the plurality of samples, and a distance between groups of level measurement values of n beams included in any two samples corresponding to each candidate grid meets a preset distance condition.

According to the foregoing method, a candidate grid to which each sample in the training set belongs is first determined, filtering is performed on the candidate grids with reference to the traffic measurement value included in each sample, and center coordinates of a grid obtained through filtering are determined based on a sample corresponding to the grid. In this way, a traffic statistics result corresponding to each grid can be obtained during traffic statistics collection, and this facilitates subsequent traffic optimization based on the traffic statistics result, and may further reduce complexity of subsequent computing, storage, and transmission of a large amount of data.

In a possible design, the traffic measurement value in each sample includes an uplink traffic measurement value and/or a downlink traffic measurement value; a traffic statistics value corresponding to the first grid includes an uplink traffic statistics value corresponding to the first grid and/or a downlink traffic statistics value corresponding to the first grid; the uplink traffic statistics value corresponding to the first grid is determined based on a sample that includes an uplink traffic measurement value and that is in the sample corresponding to the first grid; and/or the downlink traffic statistics value corresponding to the first grid is determined based on a sample that includes a downlink traffic measurement value and that is in the sample corresponding to the first grid; and the first grid is any grid in the candidate grids that meet the preset traffic condition in the plurality of candidate grids, and that the traffic statistics value corresponding to the first grid meets the preset traffic condition means that the uplink traffic statistics value corresponding to the first grid is greater than or equal to a preset uplink traffic threshold, and/or the downlink traffic statistics value corresponding to the first grid is greater than or equal to a preset downlink traffic threshold.

According to the foregoing method, some candidate grids with low traffic can be deleted, but the finally determined grids can still cover most traffic. Further, the complexity of subsequent computing, storage, and transmission of a large amount of data can be reduced.

In a possible design, the plurality of grids are an intersection of candidate grids corresponding to k1 uplink traffic statistics values and candidate grids corresponding to k2 downlink traffic statistics values; a ratio of a sum of the k1 uplink traffic statistics values to a total uplink traffic statistics value is greater than or equal to a first threshold, and a ratio of a sum of the k2 downlink traffic statistics values to a total downlink traffic statistics value is greater than or equal to a second threshold, where k1 and k2 are positive integers; the k1 uplink traffic statistics values are determined in descending order from uplink traffic statistics values corresponding to the plurality of candidate grids, and the k2 downlink traffic statistics values are determined in descending order from downlink traffic statistics values corresponding to the plurality of candidate grids, where total uplink traffic is a sum of uplink traffic measurement values included in the plurality of samples, and total downlink traffic is a sum of downlink traffic measurement values included in the plurality of samples; the first grid is any grid in the candidate grids that meet the preset traffic condition in the plurality of candidate grids, and that a traffic statistics value corresponding to the first grid meets the preset traffic condition means that an uplink traffic statistics value corresponding to the first grid is one of the k1 uplink traffic statistics values, and a downlink traffic statistics value corresponding to the first grid is one of the k2 downlink traffic statistics values; and the uplink traffic statistics value corresponding to the first grid is a sum of uplink traffic measurement values included in the sample corresponding to the first grid, and the downlink traffic statistics value corresponding to the first grid is a sum of downlink traffic values included in the sample corresponding to the first grid.

According to the foregoing method, some candidate grids with low traffic can be deleted, but the finally determined grids can still cover most traffic. Further, the complexity of subsequent computing, storage, and transmission of a large amount of data can be reduced.

In a possible design, the plurality of grids are a union set of candidate grids corresponding to k1 uplink traffic statistics values and candidate grids corresponding to k2 downlink traffic statistics values; a ratio of a sum of the k1 uplink traffic statistics values to a total uplink traffic statistics value is greater than or equal to a first threshold, and a ratio of a sum of the k2 downlink traffic statistics values to a total downlink traffic statistics value is greater than or equal to a second threshold, where k1 and k2 are positive integers; the k1 uplink traffic statistics values are determined in descending order from uplink traffic statistics values corresponding to the plurality of candidate grids, and the k2 downlink traffic statistics values are determined in descending order from downlink traffic statistics values corresponding to the plurality of candidate grids, where total uplink traffic is a sum of uplink traffic measurement values included in the plurality of samples, and total downlink traffic is a sum of downlink traffic measurement values included in the plurality of samples; the first grid is any grid in the candidate grids that meet the preset traffic condition in the plurality of candidate grids, and that a traffic statistics value corresponding to the first grid meets the preset traffic condition means that an uplink traffic statistics value corresponding to the first grid is one of the k1 uplink traffic statistics values, or a downlink traffic statistics value corresponding to the first grid is one of the k2 downlink traffic statistics values; and the uplink traffic statistics value corresponding to the first grid is a sum of uplink traffic values included in the sample corresponding to the first grid, and the downlink traffic statistics value corresponding to the first grid is a sum of downlink traffic values included in the sample corresponding to the first grid.

According to the foregoing method, some candidate grids with low traffic can be deleted, but the finally determined grids can still cover most traffic. Further, the complexity of subsequent computing, storage, and transmission of a large amount of data can be reduced.

In a possible design, the center coordinates of the first grid are an average value of groups of level measurement values of n beams that is calculated based on level measurement values of n beams included in each sample corresponding to the first grid.

According to the foregoing method, the center coordinates of the first grid can be calculated.

In a possible design, the radius of the first grid is a largest distance in a radius set, and the radius set includes a distance between level measurement values of n beams included in any sample corresponding to the first grid and the center coordinates of the first grid.

According to the foregoing method, the radius of the first grid can be calculated.

In a possible design, the uplink traffic corresponding to the first grid in the first time period is determined based on data that is in the second data set and that includes an uplink traffic measurement value; and the downlink traffic corresponding to the first grid in the first time period is determined based on data that is in the second data set and that includes a downlink traffic measurement value.

In a possible design, the first server may further send the uplink traffic or the downlink traffic corresponding to the first grid in the first time period to another server.

According to the foregoing method, the traffic statistics result can be calculated.

According to a second aspect, an embodiment of this application provides an apparatus for determining a traffic statistics result. The apparatus includes: a transceiver unit, configured to obtain a first data set, where the first data set includes a plurality of pieces of data collected within a first time period, each piece of data includes a traffic measurement value and level measurement values of n beams, and the traffic measurement value includes an uplink traffic measurement value and/or a downlink traffic measurement value; and a processing unit, configured to: determine, based on the level measurement values of the n beams of each piece of data and center coordinates of a first grid, a second data set associated with the first grid in the first data set, where the center coordinates of the first grid are represented by level values of n beams; and determine, based on a traffic measurement value included in each piece of data in the second data set, uplink traffic or downlink traffic corresponding to the first grid in the first time period.

In a possible design, the transceiver unit is further configured to obtain center coordinates and a radius that correspond to each of a plurality of grids in n-dimensional beam space, where the plurality of grids include the first grid.

In a possible design, when determining the second data set associated with the first grid in the first data set, the processing unit is configured to: determine any piece of data in the first data set as data in the second data set when a distance between level measurement values of n beams included in the data and the center coordinates of the first grid is less than or equal to a radius of the first grid; or determine any piece of data in the first data set as data in the second data set when a distance between level measurement values of n beams included in the data and the center coordinates of the first grid is less than a distance between the level measurement values of the n beams and center coordinates of a grid other than the first grid in a plurality of grids.

In a possible design, the processing unit is configured to: determine that the distance between the level measurement values of the n beams included in the any piece of data in the first data set and the center coordinates of the first grid is less than or equal to the radius of the first grid, and a distance between the level measurement values of the n beams included in the data and center coordinates of a second grid is less than or equal to a radius of the second grid, where the second grid is a grid other than the first grid in the plurality of grids; and determine the data as data in the second data set when the distance between the level measurement values of the n beams included in the data and the center coordinates of the first grid is less than the distance between the level measurement values of the n beams included in the data and the center coordinates of the second grid.

In a possible design, the transceiver unit is configured to obtain a training data set when obtaining the center coordinates corresponding to each of the plurality of grids in the n-dimensional beam space, where the training data set includes a plurality of samples, and each sample includes level measurement values of n beams; and the processing unit is configured to: obtain, based on the level measurement values of the n beams corresponding to each of the plurality of samples, a distance set corresponding to the training data set, where the distance set corresponding to the training data set includes a distance between any two groups of level measurement values of n beams in groups of level measurement values of n beams corresponding to the plurality of samples; determine, based on the distance set corresponding to the training data set, a sample corresponding to each of the plurality of grids, where a distance between groups of level measurement values of n beams included in any two samples corresponding to each grid meets a preset distance condition; and determine, based on the sample corresponding to each grid, the center coordinates corresponding to each grid, where the center coordinates of the first grid are determined based on a sample corresponding to the first grid.

In a possible design, the transceiver unit is configured to obtain a training data set when obtaining the center coordinates corresponding to each of the plurality of grids in the n-dimensional beam space, where the training data set includes a plurality of samples, and each sample includes a traffic measurement value and level measurement values of n beams; and the processing unit is configured to: obtain, based on the level measurement values of the n beams corresponding to each of the plurality of samples, a distance set corresponding to the training data set, where the distance set corresponding to the training data set includes a distance between any two groups of level measurement values of n beams in groups of level measurement values of n beams corresponding to the plurality of samples; determine, based on the distance set corresponding to the training data set, a sample corresponding to each of a plurality of candidate grids, where a distance between groups of level measurement values of n beams included in any two samples corresponding to each candidate grid meets a preset distance condition; determine, based on a traffic measurement value included in each sample corresponding to each candidate grid, a traffic statistics value corresponding to each of the plurality of candidate grids; determine, based on the traffic statistics value corresponding to each of the plurality of candidate grids, candidate grids that meet a preset traffic condition, and use the candidate grids that meet the preset traffic condition as the plurality of grids in the n-dimensional beam space; and determine, based on a sample corresponding to each of the plurality of grids, the center coordinates corresponding to each grid, where the center coordinates of the first grid are determined based on a sample corresponding to the first grid.

In a possible design, the traffic measurement value in each sample includes an uplink traffic measurement value and/or a downlink traffic measurement value; a traffic statistics value corresponding to the first grid includes an uplink traffic statistics value corresponding to the first grid and/or a downlink traffic statistics value corresponding to the first grid; the uplink traffic statistics value corresponding to the first grid is determined based on a sample that includes

5

an uplink traffic measurement value and that is in the sample corresponding to the first grid; and/or the downlink traffic statistics value corresponding to the first grid is determined based on a sample that includes a downlink traffic measurement value and that is in the sample corresponding to the first grid; and the first grid is any grid in the candidate grids that meet the preset traffic condition in the plurality of candidate grids, and that the traffic statistics value corresponding to the first grid meets the preset traffic condition means that the uplink traffic statistics value corresponding to the first grid is greater than or equal to a preset uplink traffic threshold, and/or the downlink traffic statistics value corresponding to the first grid is greater than or equal to a preset downlink traffic threshold.

In a possible design, the plurality of grids are an intersection of candidate grids corresponding to k1 uplink traffic statistics values and candidate grids corresponding to k2 downlink traffic statistics values; a ratio of a sum of the k1 uplink traffic statistics values to a total uplink traffic statistics value is greater than or equal to a first threshold, and a ratio of a sum of the k2 downlink traffic statistics values to a total downlink traffic statistics value is greater than or equal to a second threshold, where k1 and k2 are positive integers; the k1 uplink traffic statistics values are determined in descending order from uplink traffic statistics values corresponding to the plurality of candidate grids, and the k2 downlink traffic statistics values are determined in descending order from downlink traffic statistics values corresponding to the plurality of candidate grids, where total uplink traffic is a sum of uplink traffic measurement values included in the plurality of samples, and total downlink traffic is a sum of downlink traffic measurement values included in the plurality of samples; the first grid is any grid in the candidate grids that meet the preset traffic condition in the plurality of candidate grids, and that a traffic statistics value corresponding to the first grid meets the preset traffic condition means that an uplink traffic statistics value corresponding to the first grid is one of the k1 uplink traffic statistics values, and a downlink traffic statistics value corresponding to the first grid is one of the k2 downlink traffic statistics values; and the uplink traffic statistics value corresponding to the first grid is a sum of uplink traffic measurement values included in the sample corresponding to the first grid, and the downlink traffic statistics value corresponding to the first grid is a sum of downlink traffic values included in the sample corresponding to the first grid.

In a possible design, the plurality of grids are a union set of candidate grids corresponding to k1 uplink traffic statistics values and candidate grids corresponding to k2 downlink traffic statistics values; a ratio of a sum of the k1 uplink traffic statistics values to a total uplink traffic statistics value is greater than or equal to a first threshold, and a ratio of a sum of the k2 downlink traffic statistics values to a total downlink traffic statistics value is greater than or equal to a second threshold, where k1 and k2 are positive integers; the k1 uplink traffic statistics values are determined in descending order from uplink traffic statistics values corresponding to the plurality of candidate grids, and the k2 downlink traffic statistics values are determined in descending order from downlink traffic statistics values corresponding to the plurality of candidate grids, where total uplink traffic is a sum of uplink traffic measurement values included in the plurality of samples, and total downlink traffic is a sum of downlink traffic measurement values included in the plurality of samples; the first grid is any grid in the candidate grids that meet the preset traffic condition in the plurality of candidate grids, and that a traffic statistics value corresponding to the first grid meets the preset traffic condition means that an uplink traffic statistics value corresponding to the first grid is one of the k1 uplink traffic statistics values, or a downlink traffic statistics value corresponding to the first grid is one of the k2 downlink traffic statistics values; and the uplink traffic statistics value corresponding to the first grid is a sum of uplink traffic values included in the sample corresponding to the first grid, and the downlink traffic statistics value corresponding to the first grid is a sum of downlink traffic values included in the sample corresponding to the first grid.

In a possible design, the center coordinates of the first grid are an average value of groups of level measurement values of n beams that is calculated based on level measurement values of n beams included in each sample corresponding to the first grid.

In a possible design, the radius of the first grid is determined based on the center coordinates of the first grid and the level measurement values of the n beams included in each sample corresponding to the first grid.

In a possible design, the radius of the first grid is a largest distance in a radius set, and the radius set includes a distance between level measurement values of n beams included in any sample corresponding to the first grid and the center coordinates of the first grid.

In a possible design, the uplink traffic corresponding to the first grid in the first time period is determined based on data that is in the second data set and that includes an uplink traffic measurement value; and the downlink traffic corresponding to the first grid in the first time period is determined based on data that is in the second data set and that includes a downlink traffic measurement value.

In a possible design, the transceiver unit is configured to send the uplink traffic or the downlink traffic corresponding to the first grid in the first time period to a server.

For technical effects of designs in the second aspect, refer to the technical effects of corresponding designs in the first aspect. Repeated parts are not described again.

According to a third aspect, this application further provides an apparatus. The apparatus may perform the foregoing method design. The apparatus may be a chip or a circuit that can perform the functions corresponding to the foregoing method, or a device including the chip or the circuit.

In a possible implementation, the apparatus includes: a memory, configured to store computer-executable program code; and a processor, where the processor is coupled to the memory. The program code stored in the memory includes instructions. When the processor executes the instructions, the apparatus or a device on which the apparatus is installed is enabled to perform the method according to any one of the first aspect or the possible designs of the first aspect.

The apparatus may further include a communication interface. The communication interface may be a transceiver. Alternatively, if the apparatus is a chip or a circuit, the communication interface may be an input/output interface of the chip, for example, an input/output pin.

In a possible design, the apparatus includes corresponding functional units, separately configured to implement the steps in the foregoing method. The functions may be implemented by hardware, or may be implemented by hardware by executing corresponding software. The hardware or the software includes one or more units that correspond to the foregoing functions.

According to a fourth aspect, an embodiment of this application provides a computer-readable storage medium. The computer-readable storage medium stores a computer program. When the computer program is run on an apparatus, the method according to any one of the first aspect or the possible designs of the first aspect is performed.

According to a fifth aspect, an embodiment of this application provides a computer program product. The computer program product includes a computer program. When the computer program is run on an apparatus, the method according to any one of the first aspect or the possible designs of the first aspect is performed.

## BRIEF DESCRIPTION OF DRAWINGS

FIG. 1 is a first schematic diagram of beam space according to an embodiment of this application;

FIG. 2 is a second schematic diagram of beam space according to an embodiment of this application;

FIG. 3 is a schematic diagram of a structure of an MR according to an embodiment of this application;

FIG. 4 is an overview flowchart of a method for determining a plurality of grids in n-dimensional beam space according to an embodiment of this application;

FIG. 5 is an overview flowchart of a method for determining a traffic statistics result according to an embodiment of this application;

FIG. 6 is a first schematic diagram of a communication structure according to an embodiment of this application;

FIG. 7 is a second schematic diagram of a communication structure according to an embodiment of this application;

FIG. 8 is a third schematic diagram of a communication structure according to an embodiment of this application;

FIG. 9 is a first schematic diagram of a structure of an apparatus according to an embodiment of this application; and

FIG. 10 is a second schematic diagram of a structure of an apparatus according to an embodiment of this application.

## DESCRIPTION OF EMBODIMENTS

The following first describes technical concepts in embodiments of this application.

1. Traffic refers to a data volume of a service flow transmitted when a user performs a data transmission service. Specifically, the traffic may include uplink traffic and/or downlink traffic. For example, the uplink traffic is a sum of sizes of uplink packets sent by a terminal device to a base station in unit time, and the downlink traffic is a sum of sizes of downlink packets sent by the base station to the terminal device in unit time.

2. Massive multiple-input multiple-output (massive multiple input multiple output, MIMO)

Conventional MIMO uses two antennas, four antennas, or eight antennas, while massive MIMO has 64/128/256 channels. Eight antennas are used as an example for description. In conventional MIMO, actual signal coverage moves horizontally and does not move vertically. However, for signals in massive MIMO, a vertical spatial domain is introduced for use on a basis of horizontal space. In addition, massive MIMO further has advantages such as providing rich degrees of spatial freedom, providing more possible paths of arrival, and improving signal reliability.

For a wireless network (for example, 4.5G or 5G) based on a massive MIMO technology, a terminal device may communicate with a base station via a plurality of beams (for example, narrow beams) in beam space in an interaction process.

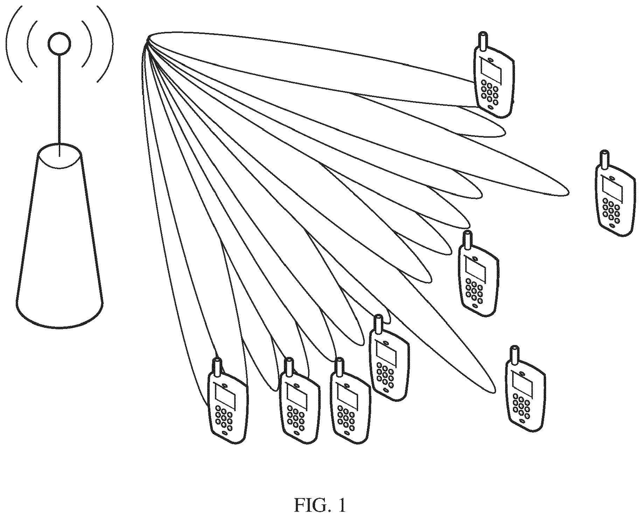

The beam space may be defined based on a plurality of static beams. FIG. 1 is a schematic diagram of possible beam space. The static beam is a beam formed through predefined weight during beamforming. For example, fixed beams are formed in a cell, where a quantity, widths, and directions of the beams are definite.

For example, a beam carrying a sounding reference signal (sounding reference signal, SRS) or a beam carrying a synchronization signal block (synchronization signal and PBCH block, SSB) is a static beam, and a transmit direction of the beam is based on a physical radio frequency (radio frequency, RF) parameter. When the physical RF parameter is definite, beam space may be defined based on a plurality of static beams carrying SRSs or a plurality of static beams carrying SSBs.

n-dimensional beam space in embodiments of this application is defined based on n static beams. For example, the n-dimensional beam space is defined based on n beams carrying SRSs. In this case, n is a quantity of beams received by a beam antenna. Alternatively, the n-dimensional beam space is defined based on n beams carrying SSBs. In this case, n is a quantity of beams received by a beam antenna.

3. Indicate a location of a terminal device based on beam space

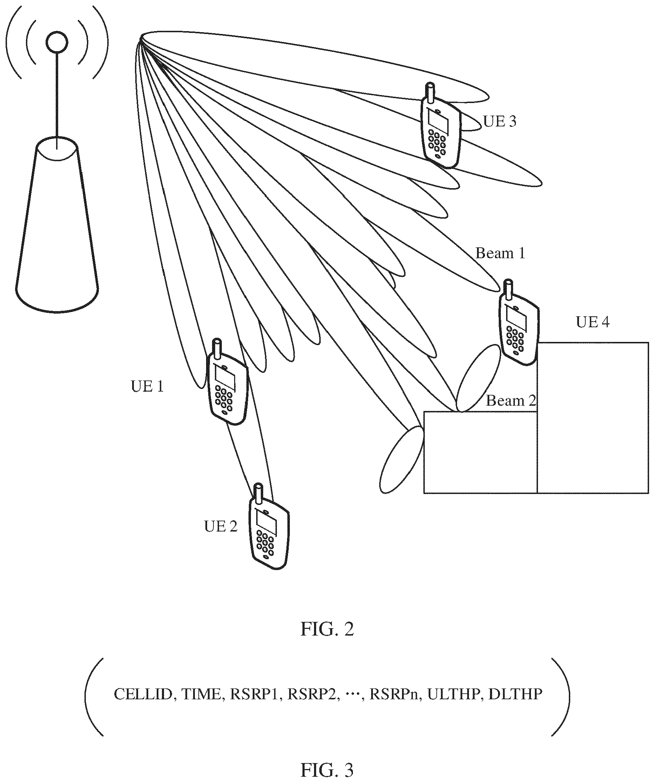

Based on beam space shown in FIG. 2, currently, the location of the terminal device may be determined in the following manners:

Manner 1: Different beams may be used to distinguish between different locations in the beam space. For example, UE 1 and UE 3 correspond to different beam IDs, and a quantity of beams available to the UE 1 is different from a quantity of beams available to the UE 3, so that a location of the UE 1 and a location of the UE 3 may be determined based on the foregoing information. A beam corresponding to the UE 1 is a beam used when the UE 1 communicates with a base station, and the quantity of beams available to the UE 1 is a quantity of beams that may be used when the UE 1 communicates with the base station. Similarly, a beam corresponding to the UE 3 is a beam used when the UE 3 communicates with the base station, and the quantity of beams available to the UE 3 is a quantity of beams that may be used when the UE 3 communicates with the base station.

Manner 2: Different level values corresponding to a same beam may also be used to indicate different locations in the beam space. For example, a beam ID corresponding to UE 1 is the same as a beam ID corresponding to UE 2. However, because a distance between the UE 1 and a base station is different from a distance between the UE 2 and the base station, a level value corresponding to the UE 1 is different from a level value corresponding to the UE 2. Further, a location of the UE 1 and a location of the UE 2 may be indicated based on the foregoing beam IDs and level values. For example, it is assumed that a beam corresponding to the UE 1 is a beam 1, and a beam corresponding to the UE 2 is the beam 1. In this case, the level value corresponding to the UE 1 may be a reference signal received power (reference signal received power, RSRP) obtained by the base station by measuring an SRS sent by the UE 1 via the beam 1, and the level value corresponding to the UE 2 may be an RSRP obtained by the base station by measuring an SRS sent by the UE 2 via the beam 1.

Manner 3: The location of the terminal device may be determined based on a horizontal azimuth of a primary beam, a vertical azimuth of the primary beam, and a path loss corresponding to the primary beam. Each beam corresponds to one horizontal azimuth and one vertical azimuth. When there is no obstacle between the terminal device and a base station, a value of a path loss is proportional to a distance between the terminal device and the base station. The path loss (path loss for short) is a loss generated when an electromagnetic wave is propagated in space, is caused by radiation diffusion of a transmit power and a propagation feature of a channel, and reflects a change of an average value of a received signal power in a macroscopic range.

It may be understood that the solution for determining the location of the terminal device provided in the manner 3 is mainly applied to determining the location of the terminal device in an open scenario. However, in an actual environment, signal transmission may be affected by an obstacle in the environment. Consequently, describing the location of the terminal device by using information about only one primary beam has low reliability and resolution. For example, a case in which primary beams and path losses corresponding to direct paths are the same but actual physical locations are different is prone to occur. Therefore, in this solution, the location of the terminal device cannot be accurately represented in a non-open scenario.

In conclusion, only an approximate location of the terminal device can be determined in the manner 1 and the manner 2; and the solution for determining the location of the terminal device provided in the manner 3 uses information about a single primary beam, and consequently an application scenario is limited.

In embodiments of this application, the location of the terminal device in the beam space may be determined based on information about a plurality of beams. The information about the plurality of beams can more truly reflect a situation of an actual physical environment. As shown in FIG. 2, UE 4 may receive a beam reflected by a building. Further, a location of the UE 4 may be determined based on both information about a beam 1 (namely, a primary beam), and information about a beam 2 (namely, the reflected beam). It may be understood that accuracy of determining the location of the UE 4 based on the information about the beam 1 and the information about the beam 2 is higher than accuracy of determining the location of the UE 4 based on only the information about the beam 1.

For example, the information about the plurality of beams may be determined based on a measurement report (measurement report, MR). The MR may record generation time of the MR, level measurement values of the plurality of beams, a traffic measurement value, and the like. A level measurement value of a beam may be an RSRP obtained by the base station by measuring an SRS sent by the terminal device via the beam, or an RSRP obtained by the terminal device by measuring an SSB sent by the base station via the beam. For the latter case, the terminal device needs to report the measured level measurement value of the beam to the base station.

FIG. 3 is a schematic diagram of a possible structure of an MR. CELLID denotes a cell ID. The cell ID is an ID of a serving cell of a terminal device, and the MR is an MR for the terminal device. TIME denotes generation time of the MR. RSRP1 to RSRPn are level measurement values of n beams, or may be referred to as n-dimensional beam level measurement values. RSRP1 to RSRPn are n RSRPs obtained by a base station by measuring SRSs separately sent by the terminal device via the n beams, or n RSRPs obtained by the terminal device by measuring SSBs separately sent by the base station via the n beams. n is a quantity of beams included in beam space. For example, a value of n may be 32 or 64. It may be understood that RSRP1 is used as an example, and RSRP1 is an average RSRP value or an accumulated RSRP value that is of the $1^{st}$ beam and that is obtained through measurement within a time period determined based on the generation time of the current MR and generation time of a previous MR.

In addition, it should be noted that the MR may include the level measurement values of the n beams or level measurement values of p beams, where p < n, and both p and n are positive integers. The level measurement values of the p beams herein are p valid level measurement values. It may be understood that the terminal device or the base station may be unable to measure the level measurement values of all the n beams. For example, the terminal device can measure only the level measurement values of the p beams in the n beams. In this case, the terminal device may report only the level measurement values of the p beams. For ease of subsequent use, the level measurement values of the p beams may be represented as the level measurement values of the n beams. For example, level measurement values of n-p beams other than the p beams are set to default values.

ULTHP (uplink throughput) indicates an uplink traffic measurement value, and DLTHP (downlink throughput) indicates a downlink traffic measurement value. It may be understood that the MR may include only ULTHP or DLTHP. ULTHP is a sum of sizes of accumulated uplink packets in the time period determined based on the generation time of the current MR and the generation time of the previous MR. DLTHP is a sum of sizes of accumulated downlink packets in the time period determined based on the generation time of the current MR and the generation time of the previous MR.

An embodiment of this application provides a method for determining a plurality of grids in n-dimensional beam space. A grid in the n-dimensional beam space is beam space determined in the n-dimensional beam space by using level values of a group of n beams as center coordinates and R as a radius. For a specific manner of determining center coordinates and a radius R of each grid, refer to the following embodiment.

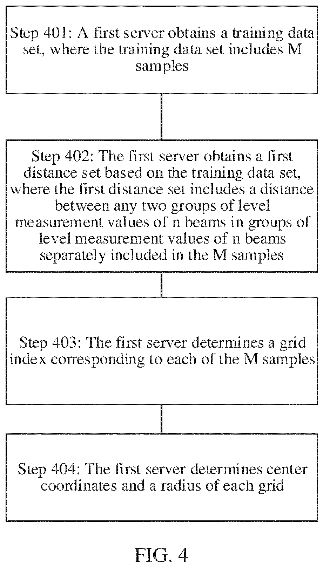

For example, a first server is used as an execution body herein. For example, the first server may be any server, processor, cloud device, edge device, or the like. This is not limited in this embodiment of this application. As shown in FIG. 4, the method includes the following steps.

Step 401: The first server obtains a training data set, where the training data set includes M samples.

For example, the training data set may include MRs collected within a preset time period. For example, the training data set may include MRs collected within one week or two weeks. In some embodiments, a base station may send an MR to the first server based on a subscription parameter. For example, the subscription parameter may include an MR reporting periodicity (for example, several minutes, several hours, or several seconds). For a specific form of the MR, refer to FIG. 3.

It should be noted that the training data set is MRs collected for a cell within the preset time period. Therefore, the plurality of grids finally determined in the n-dimensional beam space are a plurality of grids corresponding to the cell.

In a possible design, the training data set includes the M samples, and each sample includes level measurement values of n beams. For example, the first server may determine, based on M MRs, a training data set shown in a level measurement value matrix L. If an MR includes level measurement values of n beams (namely, RSRPs of the n beams), the level measurement values of the n beams are directly used as a row in the level measurement value matrix L. If an MR includes level measurement values of p beams, the level measurement values of the p beams need to be written as level measurement values of n beams. Specifically, level measurement values corresponding to n-p beams other than the p beams are set to 0, and then the obtained level measurement values of the n beams are used as a row in the level measurement value matrix L.

$$L = \begin{bmatrix} rsrp_{1,1} & rsrp_{1,2} & \cdots & rsrp_{1,n} \\ rsrp_{2,1} & rsrp_{2,2} & \cdots & rsrp_{2,n} \\ \vdots & \vdots & \ddots & \vdots \\ rsrp_{M,1} & rsrp_{M,2} & \cdots & rsrp_{M,n} \end{bmatrix}$$

Each row in the level measurement value matrix L may correspond to level measurement values of n beams in one MR, and the level measurement value matrix L indicates M groups of level measurement values.

In a possible design, the training data set includes the M samples, and each sample includes a traffic measurement value and level measurement values of n beams, where the traffic measurement value may include an uplink traffic measurement value and/or a downlink traffic measurement value. For example, the first server may determine, based on M MRs, a training data set shown in a traffic matrix *ThpMat:*

$$ThpMat = \begin{bmatrix} time_1 & rsrp_{1,1} & \cdots & rsrp_{1,n} & dlthp_1 & ulthp_1 \\ time_2 & rsrp_{2,1} & \cdots & rsrp_{2,n} & dlthp_2 & ulthp_2 \\ \vdots & \vdots & \ddots & \vdots & \vdots & \vdots \\ time_M & rsrp_{M,1} & \cdots & rsrp_{M,n} & dlthp_M & dlthp_M \end{bmatrix}$$

Each row in the traffic matrix *ThpMat* may correspond to a traffic measurement value and level measurement values of n beams in one MR. If an MR includes only *dlthp* and does not include *ulthp, ulthp* may be set to 0. Similarly, if an MR includes only *ulthp* and does not include *dlthp, dlthp* may be set to 0. The traffic matrix *ThpMat* may further

include $\begin{bmatrix} time_1 \\ time_2 \\ \vdots \\ time_M \end{bmatrix}$ , or may not include $\begin{bmatrix} time_1 \\ time_2 \\ \vdots \\ time_M \end{bmatrix}$ . This is not limited in this embodiment of this application. It may be understood that a level measurement value matrix L may be further extracted from the traffic matrix *ThpMat.*

For example, an $i^{th}$ row in the traffic matrix *ThpMat* corresponds to an $i^{th}$ MR, $time_i$ is generation time of the $i^{th}$ MR, $rsrp_{i,1}$ to $rsrp_{i,n}$ are level measurement values of n beams included in the $i^{th}$ MR, $ulthp_i$ is an uplink traffic measurement value included in the $i^{th}$ MR, and $dlthp_i$ is a downlink traffic measurement value included in the $i^{th}$ MR.

Step 402: The first server obtains, based on the training data set, a distance set corresponding to the training data set, where the distance set corresponding to the training data set includes a distance between groups of level measurement values of n beams of any two samples in the M samples.

For example, a distance matrix R (where the distance matrix R is a $M \times M$ - dimensional matrix) is calculated by using the level measurement value matrix L or the traffic matrix *ThpMat* as an input, where

$$R_{ij} = dist\left(L_{i,.}, L_{j,.}\right)$$

It may be understood that the distance set corresponding to the training data set includes M(M-1)/2 distances in total. The distance matrix R is merely a representation form of the distance set corresponding to the training data set, and the distance set corresponding to the training data set may alternatively use another representation form. This is not limited in this embodiment of this application. The distance matrix R includes some repeated elements, for example, $R_{ij}=R_{ji}$, and further includes some distances determined based on same samples, for example, $R_{ii}=0$. $R_{ij}$ represents a distance between level measurement values of n beams included in an $i^{th}$ sample and level measurement values of n beams included in a $j^{th}$ sample in the level measurement value matrix L or the traffic matrix *ThpMat,* or may be described as a distance between a beam spatial location corresponding to the $i^{th}$ sample and a beam spatial location corresponding to the $j^{th}$ sample. The distance dist may be defined as a Euclidean distance or another distance in the beam space. This is not limited in this embodiment of this application.

$L_{i,.}$ refers to level measurement values of n beams in an $i^{th}$ row in the level measurement value matrix L, that is, $\{rsrp_{i,1}, rsrp_{i,2}, ..., rsrp_{i,n}\}$, and $L_{j,.}$ refers to level measurement values of n beams in a $j^{th}$ row in the level measurement value matrix L, that is, $\{rsrp_{j,1}, rsrp_{j,2}, ..., rsrp_{j,n}\}$. Alternatively, $L_{i,.}$ refers to level measurement values of n beams in the $i^{th}$ row in the traffic matrix *ThpMat,* that is, $\{rsrp_{i,1}, rsrp_{i,2}, ..., rsrp_{i,n}\}$, and $L_{j,.}$ refers to level measurement values of n beams in a $j^{th}$ row in the traffic matrix *ThpMat,* that is, $\{rsrp_{j,1}, rsrp_{j,2}, ..., rsrp_{j,n}\}$.

For example, it is assumed that M=1000, and the level measurement value matrix L includes 1000 rows. A distance is determined based on any two rows in the level measurement value matrix L, to determine a distance matrix R, where R is a 1000 × 1000-dimensional matrix.

Step 403: The first server determines a grid index corresponding to each of the M samples.

In some embodiments, the grid index corresponding to each sample is determined based on the distance set corresponding to the training data set by using a preset clustering algorithm. For example, the preset clustering algorithm may be a distance clustering method (for example, Kmeans). This is not limited in this embodiment of this application.

Specifically, the grid index corresponding to each sample may be determined based on the distance matrix *R* by using the preset distance clustering algorithm, and may be specifically represented by a grid index matrix Label. The grid index matrix Label may be a $1 \times M$ matrix. $label_i$ is a grid index corresponding to the $i^{th}$ sample, and a value of $label_i$ is an integer ($1 \leq label_i \leq m'$), indicating that the $i^{th}$ sample corresponds to a grid indicated by $label_i$, where m'<M. A value of $m'$ may be determined based on an empirical value, or may be determined based on an actual required grid range size. It may be understood that a smaller value of $m'$ indicates a larger range of each grid, and a larger value of $m'$ indicates a smaller range of each grid.

$$Label = \begin{bmatrix} label_1 \\ label_2 \\ \vdots \\ label_M \end{bmatrix}$$

Samples with a same grid index belong to a same grid. For example, $label_2$, $label_5$, and $label_{10}$ that respectively correspond to the $2^{nd}$ sample, the $5^{th}$ sample, and the $10^{th}$ sample have a same value. Assuming that $label_2$=$label_5$=$label_{10}$=3, the $2^{nd}$ sample, the $5^{th}$ sample, and the $10^{th}$ sample belong to a grid (namely, the $3^{rd}$ grid) whose grid index is 3.

It may be understood that, in step 403, because $1 \leq label_i \leq m'$, the grid index matrix Label indicates distribution of the M samples in $m'$ grids. It should be noted that the $m'$ grids may be the plurality of finally determined grids, in other words, a quantity of the plurality of grids may be $m'$. Alternatively, the $m'$ grids may not be the plurality of finally determined grids. In this case, the $m'$ grids are $m'$ candidate grids, and filtering further needs to be performed. A quantity of the plurality of finally determined grids may be less than $m'$. The following separately describes the two cases (for details, refer to an example 1 and an example 2 in the following descriptions). Details are not described herein.

Step 404: The first server determines the center coordinates and the radius of each grid.

Based on different specific content included in the training data set, with reference to the example 1 and the example 2, the following describes how to determine the plurality of grids included in the n-dimensional beam space, and the center coordinates and the radius of each grid.

Example 1: If the training data set includes the M samples, and each sample includes the level measurement values of the n beams and does not include a traffic measurement value, after step 403, the $m'$ grids determined based on the distance matrix $R$ by using the preset distance clustering algorithm are the plurality of finally determined grids included in the n-dimensional beam space.

The center coordinates of each grid may be determined based on level measurement values of n beams included in each sample corresponding to the grid. For example, a grid corresponding to a grid index i is used as an example, and an average value of groups of level measurement values of n beams is calculated based on level measurement values of n beams included in each sample corresponding to the grid index i. The average value of the groups of level measurement values of n beams is denoted as center coordinates of an $i^{th}$ grid.

It is assumed that a grid index of the $2^{nd}$ sample, a grid index of the $5^{th}$ sample, and a grid index of the $10^{th}$ sample are the same. For example, the grid index of the $2^{nd}$ sample, the grid index of the $5^{th}$ sample, and the grid index of the $10^{th}$ sample are all 3, in other words, the $2^{nd}$ sample, the $5^{th}$ sample, and the $10^{th}$ sample belong to the $3^{rd}$ grid. In this case, center coordinates of a grid (namely, the $3^{rd}$ grid) whose grid index is 3 may be determined based on groups of level measurement values of n beams separately included in the $2^{nd}$ sample, the $5^{th}$ sample, and the $10^{th}$ sample. The groups of level measurement values of n beams separately included in the $2^{nd}$ sample, the $5^{th}$ sample, and the $10^{th}$ sample are:

$$\{rsrp_{2,1}, rsrp_{2,2}, \cdots, rsrp_{2,n}\}, \qquad \{rsrp_{5,1}, rsrp_{5,2}, \cdots, rsrp_{5,n}\},$$

and

$$\{rsrp_{10,1}, rsrp_{10,2}, \cdots, rsrp_{10,n}\}.$$

In this case, the center coordinates of the $3^{rd}$ grid determined based on the three groups of level measurement values of n beams are:

$$\left\{\frac{rsrp_{2,1}+rsrp_{5,1}+rsrp_{10,1}}{3}, \frac{rsrp_{2,2}+rsrp_{5,2}+rsrp_{10,2}}{3}, \cdots, \frac{rsrp_{2,n}+rsrp_{5,n}+rsrp_{10,n}}{3}\right\},$$

corresponding to the $3^{rd}$ row in the following center coordinate matrix $X'$.

The radius of each grid may be a preset value. For example, the preset value may be determined based on an empirical value. Alternatively, the radius of each grid may be determined based on level measurement values of n beams included in each sample corresponding to the grid and center coordinates of the grid.

For example, a radius of the $i^{th}$ grid is determined based on the level measurement values of the n beams included in each sample corresponding to the grid index i and the center coordinates of the $i^{th}$ grid. For example, the radius of the $i^{th}$ grid is determined based on a largest distance in a radius set, and the radius set includes a distance determined based on the level measurement values of the n beams included in each sample corresponding to the grid index i and the center coordinates of the $i^{th}$ grid. For example, the radius of the $i^{th}$ grid is the largest distance in the radius set, or the radius of the $i^{th}$ grid is a sum of the largest distance in the radius set and a preset distance, or the radius of the $i^{th}$ grid is a difference between the largest distance in the radius set and a preset distance.

For example, the $2^{nd}$ sample, the $5^{th}$ sample, and the $10^{th}$ sample belong to a grid whose grid index is 3, and center coordinates of the $3^{rd}$ grid may be determined based on groups of level measurement values of n beams separately included in the $2^{nd}$ sample, the $5^{th}$ sample, and the $10^{th}$ sample. The groups of level measurement values of n beams separately included in the $2^{nd}$ sample, the $5^{th}$ sample, and the $10^{th}$ sample are:

$$\{rsrp_{2,1}, rsrp_{2,2}, \cdots, rsrp_{2,n} \quad\}, \qquad \{rsrp_{5,1}, rsrp_{5,2}, \cdots, rsrp_{5,n} \quad\},$$

and

$$\{rsrp_{10,1}, rsrp_{10,2}, \cdots, rsrp_{10,n}\}.$$

The center coordinates of the $3^{rd}$ grid are:

$$\left\{\frac{rsrp_{2,1}+rsrp_{5,1}+rsrp_{10,1}}{3}, \frac{rsrp_{2,2}+rsrp_{5,2}+rsrp_{10,2}}{3}, \cdots, \frac{rsrp_{2,n}+rsrp_{5,n}+rsrp_{10,n}}{3}\right\}.$$

A radius set may be determined based on the groups of level measurement values of n beams separately included in the $2^{nd}$ sample, the $5^{th}$ sample, and the $10^{th}$ sample and the center coordinates of the $3^{rd}$ grid, and the radius set includes a distance 1, a distance 2, and a distance 3.

The distance 1 is determined based on $\{rsrp_{2,1}, rsrp_{2,2}, ..., rsrp_{2,n}\}$ and

$$\left\{\frac{rsrp_{2,1}+rsrp_{5,1}+rsrp_{10,1}}{3}, \frac{rsrp_{2,2}+rsrp_{5,2}+rsrp_{10,2}}{3}, \cdots, \frac{rsrp_{2,n}+rsrp_{5,n}+rsrp_{10,n}}{3}\right\}.$$

The distance 2 is determined based on $\{rsrp_{5,1}, rsrp_{5,2}, ..., rsrp_{5,n}\}$ and

$$\left\{\frac{rsrp_{2,1}+rsrp_{5,1}+rsrp_{10,1}}{3}, \frac{rsrp_{2,2}+rsrp_{5,2}+rsrp_{10,2}}{3}, \cdots, \frac{rsrp_{2,n}+rsrp_{5,n}+rsrp_{10,n}}{3}\right\}.$$

The distance 3 is determined based on $\{rsrp_{10,1}, rsrp_{10,2}, ..., rsrp_{10,n}\}$ and

$$\left\{\frac{rsrp_{2,1}+rsrp_{5,1}+rsrp_{10,1}}{3}, \frac{rsrp_{2,2}+rsrp_{5,2}+rsrp_{10,2}}{3}, \cdots, \frac{rsrp_{2,n}+rsrp_{5,n}+rsrp_{10,n}}{3}\right\}.$$

A radius of the $3^{rd}$ grid is a largest distance in the distance 1, the distance 2, and the distance 3.

For example, center coordinates separately corresponding to the *m'* grids may be represented by the center coordinate matrix *X'*, where *m'* represents a quantity of grids in the n-dimensional beam space, and

$$X' = \begin{bmatrix} \overline{rsrp_{1,1}} & \overline{rsrp_{1,2}} & \cdots & \overline{rsrp_{1,n}} \\ \overline{rsrp_{2,1}} & \overline{rsrp_{2,2}} & \cdots & \overline{rsrp_{2,n}} \\ \vdots & \vdots & \ddots & \vdots \\ \overline{rsrp_{m',1}} & \overline{rsrp_{m',2}} & \cdots & \overline{rsrp_{m',n}} \end{bmatrix}$$

An $i^{th}$ row in the center coordinate matrix *X'* represents the center coordinates of the grid (namely, the $i^{th}$ grid) with the grid index i. For example, the $3^{rd}$ row in the center coordinate matrix *X'* represents the center coordinates of the grid (namely, the 3rd grid) with the grid index 3.

$$\overline{rsrp_{i,j}} = \frac{\Sigma_{label_k=i} rsrp_{k,j}}{\Sigma_{label_k=i} 1}$$

$\overline{rsrp_{i,j}}$ is an average value determined based on a level measurement value of a $j^{th}$ beam in the level measurement values of the n beams included in each sample corresponding to the grid index i. $label_k = i$ indicates that a grid index corresponding to a $k^{th}$ sample is i.

Radiuses of the $m'$ grids may be the same. For example, a radius of each grid may be a preset value. Alternatively, radiuses of the $m'$ grids may be represented by a radius matrix $d'$:

$$d' = \begin{bmatrix} d_1 \\ d_2 \\ \vdots \\ d_{m'} \end{bmatrix}$$

$m'$ represents the quantity of grids in the n-dimensional beam space. An element in an $i^{th}$ row represents the radius of the $i^{th}$ grid. For example, an element in the 3rd row represents the radius of the 3rd grid.

$$d_i = \max_{label_k=i} \left( dist\left( L_k, X'(i,\cdot) \right) \right)$$

$d_i$ refers to a distance between $X'(i,\cdot)$ and an element that is farthest away from $X'(i,\cdot)$ in a sample that meets $label_k = i$ (namely, a sample corresponding to the grid index i or a sample corresponding to the $i^{th}$ grid). $X'(i,\cdot)$ represents the $i^{th}$ row in the center coordinate matrix $X'$, namely, the center coordinates of the $i^{th}$ grid, and $L_k$ represents any sample in the sample that meets $label_k = i$. Specifically, a distance between the center coordinates of the $i^{th}$ grid and the level measurement values of the n beams included in each sample corresponding to the $i^{th}$ grid is calculated, and a largest distance is used as the radius of the $i^{th}$ grid. For example, assuming that the $i^{th}$ grid corresponds to s samples, s distances may be determined based on groups of level measurement values of n beams separately included in the s samples and the center coordinates of the $i^{th}$ grid, and a largest distance in the s distances is used as the radius of the $i^{th}$ grid.

The solution of determining the plurality of grids included in the n-dimensional beam space and the center coordinates and the radius of each grid according to the method shown in the example 1 is simple and easy to implement. Because the center coordinates of each grid are an average value of level measurement values of a plurality of samples, representing a spatial location of traffic by center coordinates of a grid can reduce impact of noise and a measurement error on space, and therefore the spatial location of the traffic is more statistically significant.

Example 2: If the training data set includes the M samples, and each sample includes the traffic measurement value and the level measurement values of the n beams, after step 403, the $m'$ grids determined based on the distance matrix by using the preset distance clustering algorithm are not the plurality of finally determined grids included in the n-dimensional beam space. The $m'$ grids determined after step 403 are $m'$ candidate grids, and filtering further needs to be performed on the $m'$ candidate grids based on the traffic measurement value included in each sample, to obtain the plurality of finally determined grids included in the n-dimensional beam space.

The traffic measurement value in each sample includes an uplink traffic measurement value and/or a downlink traffic measurement value. An uplink traffic statistics value of an $i^{th}$ candidate grid is a sum of uplink traffic values of samples including uplink traffic measurement values in a sample corresponding to the $i^{th}$ candidate grid. A downlink traffic statistics value of the $i^{th}$ candidate grid is a sum of downlink traffic values of samples including downlink traffic measurement value in the sample corresponding to the $i^{th}$ candidate grid. Alternatively, an uplink traffic statistics value of an $i^{th}$ candidate grid is an uplink traffic average value corresponding to a sample corresponding to the $i^{th}$ candidate grid. A downlink traffic statistics value of the $i^{th}$ candidate grid is a downlink traffic average value corresponding to the sample corresponding to the $i^{th}$ candidate grid.

For example, the 4th candidate grid includes five samples, where a sample 1, a sample 3, and a sample 4 each include a downlink traffic measurement value, a sample 2 includes an uplink traffic measurement value, and a sample 5 includes an uplink traffic measurement value and a downlink traffic measurement value. In this case, an uplink traffic statistics value of the 4th candidate grid is a sum of the uplink traffic measurement value included in the sample 2 and the uplink traffic measurement value included in the sample 5, and a downlink traffic statistics value of the 4th candidate

grid is a sum of the downlink traffic measurement value included in the sample 1, the downlink traffic measurement value included in the sample 3, the downlink traffic measurement value included in the sample 4, and the downlink traffic measurement value included in the sample 5. Alternatively, an uplink traffic statistics value of the 4th candidate grid is a sum of the uplink traffic measurement value included in the sample 2 and the uplink traffic measurement value included in the sample 5 divided by 2, and a downlink traffic statistics value of the 4th candidate grid is a sum of the downlink traffic measurement value included in the sample 1, the downlink traffic measurement value included in the sample 3, the downlink traffic measurement value included in the sample 4, and the downlink traffic measurement value included in the sample 5 divided by 4.

For example, traffic measurement values in the M samples are summarized based on the grid index matrix *Label,* to obtain traffic statistics values separately corresponding to the *m'* candidate grids. For example, the traffic statistics values separately corresponding to the *m'* candidate grids may be represented by using the following uplink traffic statistics value *ULTHP* and/or downlink traffic statistics value *DLTHP,* where

$$ULTHP = \begin{bmatrix} ulthp_1 \\ ulthp_2 \\ \vdots \\ ulthp_{m'} \end{bmatrix} \text{ and } DLTHP = \begin{bmatrix} dlthp_1 \\ dlthp_2 \\ \vdots \\ dlthp_{m'} \end{bmatrix}$$

*ulthp_i* and *dlthp_i* respectively represent the uplink traffic statistics value of the i<sup>th</sup> candidate grid and the downlink traffic statistics value of the i<sup>th</sup> candidate grid.

The uplink traffic statistics value *ULTHP* includes *m'* uplink traffic statistics values, namely, uplink traffic statistics values separately corresponding to the *m'* candidate grids, and the downlink traffic statistics value *DLTHP* includes *m'* downlink traffic statistics values, namely, uplink traffic statistics values separately corresponding to the *m'* candidate grids.

Specifically, filtering may be performed on the *m'* candidate grids in, but not limited to, the following manners, to obtain the plurality of finally determined grids included in the n-dimensional beam space.

Manner 1: If the uplink traffic statistics value of the i<sup>th</sup> candidate grid meets a preset uplink traffic threshold, and/or the downlink traffic statistics value of the i<sup>th</sup> candidate grid meets a preset downlink traffic threshold, the i<sup>th</sup> candidate grid is used as the finally determined grid.

The preset uplink traffic threshold and the preset downlink traffic threshold may be determined based on an empirical value, or may be determined based on an actual filtering requirement. For example, when a candidate grid with a large uplink traffic statistics value needs to be filtered out, the preset uplink traffic threshold may be increased.

Therefore, determining is performed on the uplink traffic statistics values and/or downlink traffic statistics values separately corresponding to the *m'* candidate grids and corresponding thresholds, to finally determine the plurality of grids included in the n-dimensional beam space.

Manner 2: k1 uplink traffic statistics values are filtered out from the *m'* uplink traffic statistics values in descending order of the *m'* uplink traffic statistics values, and k2 downlink traffic statistics values are filtered out from the *m'* downlink traffic statistics values in descending order of the *m'* downlink traffic statistics values. A ratio of a sum of the k1 uplink traffic statistics values to a total uplink traffic statistics value is greater than or equal to a first threshold, and a ratio of a sum of the k2 downlink traffic statistics values to a total downlink traffic statistics value is greater than or equal to a second threshold, where k1 and k2 are positive integers. The total uplink traffic statistics value is a sum of uplink traffic values of samples including an uplink traffic measurement value in the M samples, and the total downlink traffic statistics value is a sum of downlink traffic values of samples including a downlink traffic measurement value in the M samples. The first threshold may be the same as or different from the second threshold. For example, the first threshold=the second threshold=0.8. An i<sup>th</sup> uplink traffic statistics value in the *m'* uplink traffic statistics values is the sum of the uplink traffic values of the samples including an uplink traffic measurement value in the sample corresponding to the i<sup>th</sup> candidate grid. An i<sup>th</sup> downlink traffic statistics value in the *m'* downlink traffic statistics values is the sum of the downlink traffic values of the samples including a downlink traffic measurement value in the sample corresponding to the i<sup>th</sup> candidate grid.

In some embodiments, the plurality of grids are an intersection of candidate grids separately corresponding to the k1 uplink traffic statistics values and candidate grids separately corresponding to the k2 downlink traffic statistics values. For example, if the k1 uplink traffic statistics values include the uplink traffic statistics value of the i<sup>th</sup> candidate grid, and the k2 downlink traffic statistics values include the downlink traffic statistics value of the i<sup>th</sup> candidate grid, the i<sup>th</sup> candidate grid is used as the finally determined grid. For example, if the k1 uplink traffic statistics values include the uplink traffic statistics value of the i<sup>th</sup> candidate grid, and the k2 downlink traffic statistics values do not include the downlink traffic statistics value of the i<sup>th</sup> candidate grid, the i<sup>th</sup> candidate grid is not the finally determined grid.

In some embodiments, the plurality of grids are a union set of candidate grids separately corresponding to the k1 uplink traffic statistics values and candidate grids separately corresponding to the k2 downlink traffic statistics values. For example, if the k1 uplink traffic statistics values include the uplink traffic statistics value of the i<sup>th</sup> candidate grid, or

the k2 downlink traffic statistics values include the downlink traffic statistics value of the $i^{th}$ candidate grid, the $i^{th}$ candidate grid is used as the finally determined grid. For example, if the k1 uplink traffic statistics values do not include the uplink traffic statistics value of the $i^{th}$ candidate grid, and the k2 downlink traffic statistics values do not include the downlink traffic statistics value of the $i^{th}$ candidate grid, the $i^{th}$ candidate grid is not the finally determined grid.

For example, $m_u$ grids are filtered out based on the uplink traffic statistics value *ULTHP* in descending order of element values, so that a proportion of a sum of uplink traffic statistics values separately corresponding to the $m_u$ grids to the total uplink traffic statistics value $\sum_{i=1}^{m'} ulthp_i$ exceeds $r_u$ (where $0 < r_u < 1$, and for example, $r_u$ takes a value greater than or equal to 0.8), and indexes of the $m_u$ grids are denoted as:

$$I_u = \left( i_u^1, i_u^2, \cdots, i_u^{m_u} \right)$$

Similarly, $m_d$ grids are filtered out based on the downlink traffic statistics value *DLTHP* in descending order of element values, so that a proportion of a sum of downlink traffic statistics values separately corresponding to the $m_d$ grids to the total downlink traffic $\sum_{i=1}^{m'} dlthp_i$ exceeds $r_d$ (where $0 < r_d < 1$, and for example, $r_d$ takes a value greater than or equal to 0.8), and indexes of the $m_d$ grids are denoted as:

$$I_d = \left( i_d^1, i_d^2, \cdots, i_d^{m_d} \right)$$

$I = I_u \cup I_d$ is taken, and a quantity of elements of $I$ is denoted as $m1$, in other words, a quantity of finally determined grids is m1. Alternatively, $I = I_u \cap I_d$ is taken, and a quantity of elements of $I$ is denoted as $m2$, in other words, a quantity of finally determined grids is m2.

Therefore, whether the uplink traffic statistics values separately corresponding to the m' candidate grids belong to the k1 uplink traffic statistics values is determined, and whether the downlink traffic statistics values separately corresponding to the *m'* candidate grids belong to the k2 downlink traffic statistics values is determined, to finally determine the plurality of grids included in the n-dimensional beam space.

Similar to the example 1, after the plurality of grids included in the n-dimensional beam space are finally determined, the center coordinates of each grid may be determined based on level measurement values of n beams included in each sample corresponding to the grid. For example, assuming that the $i^{th}$ grid is a grid in the plurality of finally determined grids, an average value of groups of level measurement values of n beams is calculated based on level measurement values of n beams included in each sample corresponding to the $i^{th}$ grid, and the average value of the groups of level measurement values of n beams is denoted as center coordinates of the $i^{th}$ grid.

The radius of each grid may be a preset value. For example, the preset value may be determined based on an empirical value. Alternatively, the radius of each grid may be determined based on level measurement values of n beams included in each sample corresponding to the grid and center coordinates of the grid. For example, a radius of the $i^{th}$ grid is determined based on level measurement values of n beams included in each sample corresponding to a grid index i and the center coordinates of the $i^{th}$ grid. For example, the radius of the $i^{th}$ grid is determined based on a largest distance in a radius set, and the radius set includes a distance determined based on the level measurement values of the n beams included in each sample corresponding to the grid index i and the center coordinates of the $i^{th}$ grid. For example, the radius of the $i^{th}$ grid is the largest distance in the radius set, or the radius of the $i^{th}$ grid is a sum of the largest distance in the radius set and a preset distance, or the radius of the $i^{th}$ grid is a difference between the largest distance in the radius set and a preset distance.

For example, center coordinates separately corresponding to the *m'* candidate grids may be represented by a center coordinate matrix *X'*, where *m'* represents a quantity of candidate grids in the n-dimensional beam space, and

$$X' = \begin{bmatrix} \overline{rsrp_{1,1}} & \overline{rsrp_{1,2}} & \cdots & \overline{rsrp_{1,n}} \\ \overline{rsrp_{2,1}} & \overline{rsrp_{2,2}} & \cdots & \overline{rsrp_{2,n}} \\ \vdots & \vdots & \ddots & \vdots \\ \overline{rsrp_{m',1}} & \overline{rsrp_{m',2}} & \cdots & \overline{rsrp_{m',n}} \end{bmatrix}$$

An $i^{th}$ row in the center coordinate matrix *X'* represents center coordinates of a candidate grid (namely, the $i^{th}$ candidate grid) with the grid index i. The $3^{rd}$ row in the center coordinate matrix *X'* represents center coordinates of a candidate grid (namely, the 3$^{rd}$ candidate grid) with a grid index 3, as shown in the foregoing example.

$$\overline{rsrp_{i,j}} = \frac{\Sigma_{label_k=i} rsrp_k}{\Sigma_{label_k=i} 1}$$

$\overline{rsrp_{i,j}}$ is an average value determined based on a $j^{th}$-dimensional level measurement value in the level measurement values of the n beams included in each sample corresponding to the grid index i.

Radiuses of the $m'$ candidate grids may be the same. For example, a radius of each candidate grid may be a preset value. Alternatively, radiuses of the $m'$ candidate grids may be represented by a radius matrix $d'$:

$$d' = \begin{bmatrix} d_1 \\ d_2 \\ \vdots \\ d_{m'} \end{bmatrix}$$

$m'$ represents the quantity of candidate grids in the n-dimensional beam space. An element in an $i^{th}$ row represents the radius of the $i^{th}$ candidate grid. For example, an element in the 3$^{rd}$ row represents a radius of the 3$^{rd}$ candidate grid.

$$d_i = \max_{label_k=i} \left( dist\left(L_k, X'(i,\cdot)\right) \right)$$

$d_i$ refers to a distance between $X'(i,\cdot)$ and an element that is farthest away from $X'(i,\cdot)$ in a sample that meets $label_k = i$ (namely, a sample corresponding to the grid index i or the sample corresponding to the i$^{th}$ candidate grid). $X'(i,\cdot)$ represents the $i^{th}$ row in the center coordinate matrix $X'$, namely, the center coordinates of the candidate grid (the i$^{th}$ candidate grid) with the grid index i. Specifically, a distance between the center coordinates of the i$^{th}$ candidate grid and the level measurement values of the n beams included in each sample corresponding to the i$^{th}$ candidate grid is calculated, and a largest distance is used as the radius of the i$^{th}$ candidate grid. For example, assuming that the i$^{th}$ candidate grid corresponds to s samples, s distances may be determined based on groups of level measurement values of n beams separately included in the s samples and the center coordinates of the i$^{th}$ candidate grid, and a largest distance in the s distances is determined as the radius of the i$^{th}$ candidate grid.

With reference to the manner 1, based on grid indexes of candidate grids whose uplink traffic statistics values meet the preset uplink traffic threshold, corresponding rows are extracted from the center coordinate matrix $X'$ and denoted as a center coordinate matrix X, and corresponding rows are extracted from the radius matrix $d'$ and denoted as a radius matrix $d$. Alternatively, based on grid indexes of candidate grids whose downlink traffic statistics values meet the preset downlink traffic threshold, corresponding rows are extracted from the center coordinate matrix $X'$ and denoted as a center coordinate matrix X, and corresponding rows are extracted from the radius matrix $d'$ and denoted as a radius matrix $d$. Alternatively, based on an intersection or a union set of grid indexes of candidate grids whose uplink traffic statistics values meet the preset uplink traffic threshold and grid indexes of candidate grids whose downlink traffic statistics values meet the preset downlink traffic threshold, corresponding rows are extracted from the center coordinate matrix $X'$ and denoted as a center coordinate matrix X, and corresponding rows are extracted from the radius matrix $d'$ and denoted as a radius matrix $d$.

With reference to the manner 2, corresponding rows are extracted from the center coordinate matrix $X'$ based on values of the elements in $I$, and are denoted as a center coordinate matrix X. Specifically, if $i \in I$, the i$^{th}$ row in $X'$ is reserved. Otherwise, the i$^{th}$ row is deleted. In addition, corresponding rows are extracted from the radius matrix $d'$ based on the values of the elements in $I$, and are denoted as a radius matrix $d$.

For example, the finally output center coordinate matrix X is:

$$X = \begin{bmatrix} \overline{rsrp_{1,1}} & \overline{rsrp_{1,2}} & \cdots & \overline{rsrp_{1,n}} \\ \overline{rsrp_{2,1}} & \overline{rsrp_{2,2}} & \cdots & \overline{rsrp_{2,n}} \\ \vdots & \vdots & \ddots & \vdots \\ \overline{rsrp_{m,1}} & \overline{rsrp_{m,2}} & \cdots & \overline{rsrp_{m,n}} \end{bmatrix}$$

The finally output radius matrix d is:

$$d = \begin{bmatrix} d_1 \\ d_2 \\ \vdots \\ d_m \end{bmatrix}$$

It can be learned from the center coordinate matrix X and the center coordinate matrix $d$ that a quantity of the plurality of finally determined grids included in the n-dimensional beam space is m, and m≤m'.

According to the method shown in the example 2, filtering can be performed on the candidate grids based on a traffic measurement value included in each sample, and therefore some grids with low traffic can be deleted. A quantity of grids determined according to the method shown in the example 2 is less than a quantity of grids determined according to the method shown in the example 1, but the determined grids can still cover most traffic. In other words, complexity of subsequent big data computing, storage, and transmission is reduced on the premise that a final effect (namely, a traffic statistics result) of traffic sensing is not greatly affected.

In addition, it may be understood that, after the plurality of grids in the n-dimensional beam space are determined, the plurality of determined grids may be further updated at an interval of a preset time period, in other words, step 401 to step 404 are periodically performed. A process of determining a plurality of grids in the n-dimensional beam space based on collected MRs for the first time may also be referred to as a grid initialization process. A process of determining a plurality of grids in the n-dimensional beam space based on collected MRs not for the first time may also be referred to as a grid update process.

Further, after the plurality of grids in the n-dimensional beam space are determined according to the foregoing method, a grid associated with a first terminal device may be determined based on level measurement values of n beams corresponding to the first terminal device, and a location of the terminal device may be represented by using the grid associated with the first terminal device.

In a possible design, assuming that the n-dimensional beam space includes m grids, distances between center coordinates of the m grids and the level measurement values of the n beams corresponding to the first terminal device may be sequentially calculated based on a sequence of grid indexes of the m grids. When a distance between the level measurement values of the n beams corresponding to the first terminal device and center coordinates of an $i^{th}$ grid is less than or equal to a radius of the $i^{th}$ grid, it is determined that the first terminal device is associated with the $i^{th}$ grid. In this case, a distance between center coordinates of another remaining grid after the $i^{th}$ grid and the level measurement values of the n beams corresponding to the first terminal device may not need to be determined.

For example, assuming that the n-dimensional beam space includes 10 grids, distances between center coordinates of the 10 grids and the level measurement values of the n beams corresponding to the first terminal device may be sequentially calculated based on a sequence of grid indexes of the 10 grids. When a distance between the level measurement values of the n beams corresponding to the first terminal device and center coordinates of the $1^{st}$ grid is greater than a radius of the $1^{st}$ grid, it is determined that the first terminal device is not associated with the $1^{st}$ grid, and a distance between the level measurement values of the n beams corresponding to the first terminal device and center coordinates of the $2^{nd}$ grid continues to be calculated. When the distance between the level measurement values of the n beams corresponding to the first terminal device and the center coordinates of the $2^{nd}$ grid is greater than a radius of the $2^{nd}$ grid, it is determined that the first terminal device is not associated with the $2^{nd}$ grid, and a distance between the level measurement values of the n beams corresponding to the first terminal device and center coordinates of the $3^{rd}$ grid continues to be calculated. When the distance between the level measurement values of the n beams corresponding to the first terminal device and the center coordinates of the $3^{rd}$ grid is less than or equal to a radius of the $3^{rd}$ grid, it is determined that the first terminal device is associated with the $3^{rd}$ grid, and calculation of a distance between the level measurement values of the n beams corresponding to the first terminal device and center coordinates of the $4^{th}$ grid is stopped.

In a possible design, it is assumed that the n-dimensional beam space includes m grids, and distances determined based on the level measurement values of the n beams corresponding to the first terminal device and center coordinates of N grids in the m grids are all less than corresponding radiuses, where 2≤N<n, and N is a positive integer. In this case, a grid corresponding to a smallest distance is selected as the grid associated with the first terminal device, or any grid in the N grids is selected as the grid associated with the first terminal device.

For example, a distance (denoted as a first distance) between the level measurement values of the n beams corresponding to the first terminal device and center coordinates of an $i^{th}$ grid is less than a radius of the $i^{th}$ grid, and a distance (denoted as a second distance) between the level measurement values of the n beams corresponding to the first terminal device and center coordinates of a $j^{th}$ grid is less than a radius of the $j^{th}$ grid. If the first distance is less than the second distance, the grid associated with the first terminal device is the $i^{th}$ grid.

For another example, a distance (denoted as a distance 1) between the level measurement values of the n beams corresponding to the first terminal device and center coordinates of the 1st grid is less than a radius of the 1st grid, a distance (denoted as a distance 5) between the level measurement values of the n beams corresponding to the first terminal device and center coordinates of the 5th grid is less than a radius of the 5th grid, and a distance (denoted as a distance 11) between the level measurement values of the n beams corresponding to the first terminal device and center coordinates of the 11th grid is less than a radius of the 11th grid. In the distance 1, the distance 5, and the distance 11, the distance 11 is the smallest. In this case, the grid associated with the first terminal device is the 11th grid. Alternatively, any one of the 1st grid, the 5th grid, and the 11th grid is selected as the grid associated with first terminal device.

In a possible design, it is assumed that the n-dimensional beam space includes m grids. For example, a distance between the level measurement values of the n beams corresponding to the first terminal device and center coordinates of each grid in the m grids is calculated to obtain m distances, and a grid corresponding to a smallest distance in the m distances is used as the grid associated with the first terminal device. For example, if the grid corresponding to the smallest distance in the m distances is an ith grid, the ith grid is used as the grid associated with the first terminal device.

Based on the plurality of grids in the n-dimensional beam space that are determined in the foregoing embodiment, spatial-temporal distribution of traffic statistics results may be further obtained based on the plurality of grids.

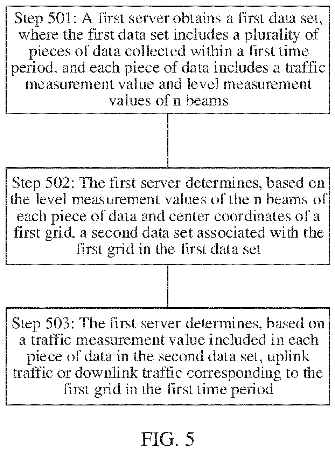

An embodiment of this application provides a method for determining a traffic statistics result. For example, a first server is used as an execution body herein. For example, the first server may be any server, processor, cloud device, edge device, or the like. This is not limited in this embodiment of this application. It may be understood that the execution body of the embodiment shown in FIG. 4 may be the same as or different from the execution body of the embodiment shown in FIG. 5. This is not limited in this embodiment of this application.

As shown in FIG. 5, the method includes the following steps.

Step 501: The first server obtains a first data set, where the first data set includes a plurality of pieces of data collected within a first time period, and each piece of data includes a traffic measurement value and level measurement values of n beams.

For example, the first data set may include MRs collected within the first time period. For example, the first data set may include MRs collected within one week or two weeks, or the first data set may include MRs collected within one day, or the first data set may include MRs collected within one hour, or the first data set may include MRs collected from 7:00 AM to 10:00 AM.

The first data set is different from the training data set. The training data set may include the MRs collected within the preset time period, and the first data set may include the MRs collected within the first time period. The first time period is later than the preset time period, and both the first data set and the training data set are MRs obtained for a same cell.

For example, a base station may send an MR to the first server based on a subscription parameter. For example, the subscription parameter may include an MR reporting periodicity (for example, several minutes, several hours, or several seconds). It may be understood that the first server may divide, based on generation time in MRs, collected data into data sets separately corresponding to a plurality of time periods, to obtain a plurality of data sets. The first data set may be one of the plurality of data sets. In addition, it should be noted that the first data set is MRs collected for a cell with the first time period, and the first data set may be identified by a cell identifier and the first time period. The cell corresponding to the first data set and the cell corresponding to the plurality of grids in the n-dimensional beam space are a same cell, and any grid in the plurality of grids may be identified by the cell identifier and a grid index.

For example, the first data set includes K pieces of data. The first data set may be shown in $ThpMat_1$, and a level matrix $L_1$ may be extracted from $ThpMat_1$, where

$$ThpMat_1 = \begin{bmatrix} time_{1,1} & rsrp_{1,2} & \cdots & rsrp_{1,n} & dlthp_1 & ulthp_1 \\ time_{2,1} & rsrp_{2,2} & \cdots & rsrp_{2,n} & dlthp_2 & ulthp_2 \\ \vdots & \vdots & \ddots & \vdots & \vdots & \vdots \\ time_{K,1} & rsrp_{K,2} & \cdots & rsrp_{K,n} & dlthp_K & dlthp_K \end{bmatrix},$$

and

$$L_1 = \begin{bmatrix} rsrp_{1,1} & rsrp_{1,2} & \cdots & rsrp_{1,n} \\ rsrp_{2,1} & rsrp_{2,2} & \cdots & rsrp_{2,n} \\ \vdots & \vdots & \ddots & \vdots \\ rsrp_{K,1} & rsrp_{K,2} & \cdots & rsrp_{K,n} \end{bmatrix}.$$

Each row in $ThpMat_1$ may correspond to generation time, a traffic measurement value (an uplink traffic measurement value and/or a downlink traffic measurement value), and level measurement values of n beams included in one MR, where K is a quantity of pieces of data included in the first data set. Each row in the level matrix $L_1$ is level measurement values of n beams. $time_{1,1}$ to $time_{K,1}$ all belong to the first time period.

Step 502: The first server determines, based on the level measurement values of the n beams of each piece of data and center coordinates of a first grid, a second data set associated with the first grid in the first data set, where the center coordinates of the first grid are represented by level values of n beams.

It may be understood that the first grid may be any grid in the plurality of grids in the n-dimensional beam space, or the first grid may be a specific grid in the plurality of grids in the n-dimensional beam space.

For example, the first server may determine the second data set associated with the first grid in the first data set in, but not limited to, the following manners:

Manner 1: The first server determines any piece of data in the first data set as data in the second data set when a distance between level measurement values of n beams included in the data and the center coordinates of the first grid is less than or equal to a radius of the first grid.

For example, assuming that the n-dimensional beam space includes m grids, and the first data set includes first data, the first server may sequentially calculate, based on a sequence of grid indexes of the m grids, distances between center coordinates of the m grids and level measurement values of n beams included in the first data. When a distance between the level measurement values of the n beams included in the first data and the center coordinates of the first grid is less than or equal to the radius of the $i^{th}$ grid, it is determined that the first data is associated with the first grid. In this case, a distance between center coordinates of another grid before the first grid and the level measurement values of the n beams included in the first data is greater than a corresponding radius. For example, assuming that the n-dimensional beam space includes 10 grids, distances between center coordinates of the 10 grids and level measurement values of n beams included in first data may be sequentially calculated based on a sequence of grid indexes of the 10 grids. When a distance between the level measurement values of the n beams included in the first data and center coordinates of the $1^{st}$ grid is greater than a radius of the $1^{st}$ grid, it is determined that the first data is not associated with the $1^{st}$ grid, and a distance between the level measurement values of the n beams included in the first data and center coordinates of the $2^{nd}$ grid continues to be calculated. When the distance between the level measurement values of the n beams included in the first data and the center coordinates of the $2^{nd}$ grid is greater than a radius of the $2^{nd}$ grid, it is determined that the first data is not associated with the $2^{nd}$ grid, and a distance between the level measurement values of the n beams included in the first data and center coordinates of the $3^{rd}$ grid continues to be calculated. When the distance between the level measurement values of the n beams included in the first data and the center coordinates of the $3^{rd}$ grid is less than or equal to a radius of the $3^{rd}$ grid, it is determined that the first data is associated with the $3^{rd}$ grid, and calculation of a distance between the level measurement values of the n beams included in the first data and center coordinates of the $4^{th}$ grid is stopped.

For example, it is assumed that the n-dimensional beam space includes m grids, the first data set includes first data, and distances determined based on level measurement values of n beams included in the first data and center coordinates of N grids in the m grids are all less than corresponding radiuses, where $2 \leq N < n$, and N is a positive integer. In this case, the first server may select any grid from the N grids as a grid associated with the first data. For example, a distance (denoted as a distance 1) between the level measurement values of the n beams included in the first data and center coordinates of the $1^{st}$ grid is less than a radius of the $1^{st}$ grid, a distance (denoted as a distance 5) between the level measurement values of the n beams included in the first data and center coordinates of the $5^{th}$ grid is less than a radius of the $5^{th}$ grid, and a distance (denoted as a distance 11) between the level measurement values of the n beams included in the first data and center coordinates of the $11^{th}$ grid is less than a radius of the $11^{th}$ grid. In this case, any one of the $1^{st}$ grid, the $5^{th}$ grid, and the $11^{th}$ grid is selected as the grid associated with the first data.

For example, the first server determines distances (denoted as a distance set 1) between level measurement values of n beams included in first data and center coordinates separately corresponding to the plurality of grids, where the first data is data in the first data set. Then, the first server determines a distance set 2 based on a radius corresponding to each grid in the plurality of grids and the distance set 1, and determines that the second data set includes the first data when a smallest distance in the distance set 2 is a distance between the center coordinates the first grid and the level measurement values of the n beams included in the first data. Any distance in the distance set 2 is less than a radius of a grid corresponding to the distance.

For example, it is assumed that the n-dimensional beam space includes m grids, and distances determined based on level measurement values of n beams included in first data and center coordinates of N grids in the m grids are all less than corresponding radiuses, where $2 \leq N < n$, and N is a positive integer. In this case, a grid corresponding to a smallest distance is selected as a grid associated with the first data. For example, a distance (denoted as a distance 1) between the level measurement values of the n beams included in the first data and center coordinates of the $1^{st}$ grid is less than a radius of the $1^{st}$ grid, a distance (denoted as a distance 5) between the level measurement values of the n beams included in the first data and center coordinates of the $5^{th}$ grid is less than a radius of the $5^{th}$ grid, and a distance (denoted as a distance 11) between the level measurement values of the n beams included in the first data and center coordinates of the 11th grid is less than a radius of the 11th grid. In the distance 1, the distance 5, and the distance 11, the distance 11 is the smallest. In this case, the 11th grid is the grid associated with the first data.

Manner 2: The first server determines any piece of data in the first data set as data in the second data set when a distance between level measurement values of n beams included in the data and the center coordinates of the first grid is less than a distance between the level measurement values of the n beams and center coordinates of a grid other than the first grid in the plurality of grids.

For example, assuming that the n-dimensional beam space includes m grids, and the first data set includes first data, the first server calculates a distance between level measurement values of n beams included in the first data and center coordinates of each grid in the m grids to obtain m distances, and uses a grid corresponding to a smallest distance in the m distances as a grid associated with the first data. For example, if the grid corresponding to the smallest distance in the m distances is an ith grid, the ith grid is used as the grid associated with the first data.

Step 503: The first server determines, based on a traffic measurement value included in each piece of data in the second data set, uplink traffic or downlink traffic corresponding to the first grid in the first time period.

The traffic measurement value in each piece of data includes an uplink traffic measurement value and/or a downlink traffic measurement value. The uplink traffic is determined based on data that is in the second data set and that includes an uplink traffic measurement value, and the downlink traffic is determined based on data that is in the second data set and that includes a downlink traffic measurement value.

For example, the first server may use a sum of uplink traffic measurement values included in the second data set as an uplink traffic statistics result corresponding to the first grid in the first time period. The first server may use a sum of downlink traffic measurement values included in the second data set as a downlink traffic statistics result corresponding to the first grid in the first time period.

Further, based on the same implementation, data associated with each of the plurality of grids in the first data set may be determined, and a traffic statistics result corresponding to the grid in the first time period may be determined based on a traffic measurement value included in the data associated with each grid. Further, the traffic statistics result corresponding to each of the plurality of grids in the first time period is obtained.

For example, it is assumed that the plurality of grids in the n-dimensional beam space are determined according to the method in the example 2, and the cell corresponding to the plurality of grids in the n-dimensional beam space is the same as the cell corresponding to the first data set. In this case, a distance set $s_i$ is obtained based on a distance determined based on $L_1(i, \cdot)$ in the level matrix $L_1$ and each row in the center coordinate matrix $X$ determined in the example 2:

$$s_i = \left[ s_{i,1}, s_{i,2}, \cdots, s_{i,m} \right]$$

$L_1(i, \cdot)$ is an $i$[th] row in the level matrix $L_1$, namely, level measurement values of n beams included in an ith piece of data in the first data set. $X(j, \cdot)$ is a $j$[th] row in the center coordinate matrix $X$, namely, center coordinates of a jth grid in the n-dimensional beam space. $s_{i,j}$ represents a distance between the level measurement values of the n beams included in the ith piece of data and the center coordinates of the jth grid.

Each element in the distance set $s_i$ is compared with a corresponding element in the radius matrix $d$ determined in the example 2. Specifically, $s_{i,1}$ is compared with $d_1$, $s_{i,2}$ is compared with $d_2$, ..., and $s_{i,m}$ is compared with $d_m$, to determine an index of a grid to which the ith piece of data belongs. An index corresponding to a smallest value of $s_{i,j}$ when $j$ meets $s_{i,j} \leq d_j$ is the index of the grid to which the ith piece of data belongs, namely, an index of a grid to which $L_1(i, \cdot)$ belongs. For example, $s_{i,1}$ is less than $d_1$, and $s_{i,2}$ is less than $d_2$. If $s_{i,1} < s_{i,2}$, the ith piece of data belongs to the 1st grid, or it is described as that the ith piece of data is associated with the 1st grid.

If all values of $j$ meet $s_{i,j} > d_j$, the index of the grid to which the ith piece of data belongs is denoted as - 1, in other words, the ith piece of data has no grid to which the ith piece of data belongs.

Therefore, a grid to which each row in $L_1$ belongs, namely, a grid to which each piece of data belongs, may be determined according to the foregoing method, as shown in A1. A1 may be a $1 \times K$ matrix:

$$A_1 = \begin{bmatrix} a_1 \\ a_2 \\ \vdots \\ a_K \end{bmatrix}$$

$a_i$ represents the grid to which the $i$[th] piece of data in the first data set belongs, and a value range of $a_i$ is $0 < a_i < m$ or $a_i = -1$.

Further, -1 in $A_1$ and a corresponding row in *ThpMat,* may be first deleted. Without loss of generality, matrices obtained through deletion are still denoted as $A_1$ and $ThpMat_1$, In this case, it is determined that an uplink traffic statistics result $V_u$ and a downlink traffic statistics result $V_d$ in the first time period are:

$$V_u = \begin{bmatrix} ULTHP_1 \\ ULTHP_2 \\ \vdots \\ ULTHP_m \end{bmatrix} \text{ and } V_d = \begin{bmatrix} DLTHP_1 \\ DLTHP_2 \\ \vdots \\ DLTHP_m \end{bmatrix}$$

An $i^{th}$ row in $V_u$ represents an uplink traffic statistics value corresponding to an $i^{th}$ grid in the first time period, and an $i^{th}$ row in $V_d$ represents a downlink traffic statistics value corresponding to the $i^{th}$ grid in the first time period. For example, $ULTHP_1$ is determined based on an uplink traffic measurement value included in data with $a_i$=1 in A1. It is assumed that the $1^{st}$ piece of data, the $3^{rd}$ piece of data, and the $6^{th}$ piece of data belong to the $1^{st}$ grid (in other words, the $1^{st}$ piece of data, the $3^{rd}$ piece of data, and the $6^{th}$ piece of data are associated with the $1^{st}$ grid), that is, $a_1$=$a_3$=$a_6$=1, and uplink traffic measurement values included in the $1^{st}$ piece of data, the $3^{rd}$ piece of data, and the $6^{th}$ piece of data are separately $ulthp_1$, $ulthp_3$, $ulthp_6$. In this case, $ULTHP_1$ = $ulthp_1$ + $ulthp_3$ + $ulthp_6$.

It may be understood that the traffic statistics result corresponding to each grid in the first time period is described herein by using only the plurality of grids in the n-dimensional beam space that are determined according to the method shown in the example 2 as an example. The center coordinate matrix X and the grid radius matrix $d$ may alternatively be replaced with a center coordinate matrix $X'$ and a grid radius matrix $d'$.

In addition, in some embodiments, after determining the grid to which each piece of data in the first data set belongs, the first server classifies $ThpMat$, into Z time ranges of preset duration based on generation time. For example, the preset duration is $T$. $TimeRange_i$ is an $i^{th}$ sub-time period in the first time period, and duration of the $i^{th}$ sub-time period is $T$. For any sub-time period, after -1 in $A_1$ and the corresponding row in $ThpMat$, are deleted (where the matrices obtained through deletion are still denoted as $A_1$ and $ThpMat$, without loss of generality), the first server may perform, based on $A_1$, a sum operation on traffic measurement values in $ThpMat_1$ that belong to a same grid and whose generation time belongs to the sub-time period, to obtain the following traffic statistics results:

$$T_Z = [TimeRange_1, TimeRange_2, \cdots, TimeRange_Z],$$

$$V_u = \begin{bmatrix} ULTHP_{1,1} & ULTHP_{1,2} & ULTHP_{1,Z} \\ \vdots & \vdots & \vdots \\ ULTHP_{m,1} & ULTHP_{m,2} & ULTHP_{m,Z} \end{bmatrix},$$

and

$$V_d = \begin{bmatrix} DLTHP_{1,1} & ULTHP_{1,2} & ULTHP_{1,Z} \\ \vdots & \vdots & \vdots \\ DLTHP_{m,1} & ULTHP_{m,2} & ULTHP_{m,Z} \end{bmatrix}$$

$T_Z$ is a segmentation result of dividing the first preset time period into the Z time ranges of the preset duration, an $i^{th}$ row in $V_u$ represents uplink traffic statistics values corresponding to the $i^{th}$ grid in the Z time ranges, and an $i^{th}$ row in $V_d$ represents downlink traffic statistics values corresponding to the $i^{th}$ grid in the Z time ranges. A $j^{th}$ column in $V_u$ represents uplink traffic statistics values corresponding to a $j^{th}$ sub-time period in the m grids, and an $i^{th}$ row in $V_d$ represents downlink traffic statistics values corresponding to the $j^{th}$ sub-time period in the m grids.

Therefore, a traffic statistics result of user traffic determined according to the foregoing method is a traffic statistics result at a grid-level time period granularity, and costs of data computing, storage, and transmission can be reduced on the premise that a key spatial-temporal statistical feature of the traffic is maintained.

The foregoing mainly describes the solutions provided in embodiments of this application from a perspective of method procedures. The following describes apparatuses used to implement the methods in embodiments of this application with reference to the accompanying drawings. Therefore, all the foregoing content may be used in the following embodiments. Repeated content is not described again.

An embodiment of this application further provides an apparatus. The apparatus performs the methods provided in embodiments of this application. The apparatus may be independently deployed, for example, deployed on a server, or deployed on an edge node (for example, a central unit (central unit, CU) or a mobile edge computing (mobile edge computing, MEC)).

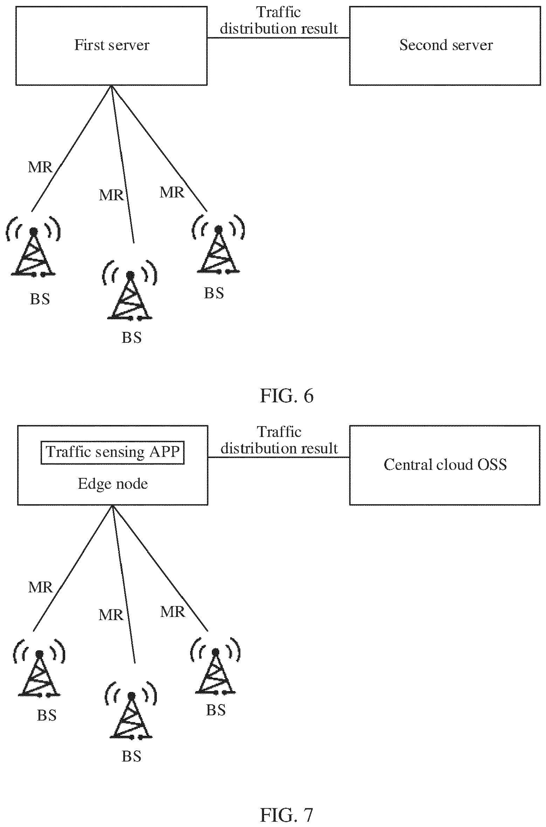

As shown in FIG. 6, the apparatus may be a first server or a chip or a functional module in the first server. The first server may receive MRs from a plurality of base stations to obtain a plurality of MRs. The first server may output, by using the plurality of MRs as inputs, a traffic distribution result determined based on the plurality of MRs. Further, the first server may store the traffic distribution result for use by the first server, or the first server may send the traffic distribution result to a second server. Each base station may send a plurality of MRs to the first server.

In an example, as shown in FIG. 7, when the apparatus is deployed on an edge node, if the edge node is connected to a plurality of base stations, the edge node may subscribe to MRs of the plurality of connected base stations. The edge node may output, by using the subscribed MRs as inputs, a traffic distribution result determined based on the subscribed MRs. The traffic distribution result determined based on the subscribed MRs may be stored on the edge node for use by the edge node, or may be backhauled to a central cloud operation support system (operation support system, OSS) to support network-wide traffic analysis or network optimization.

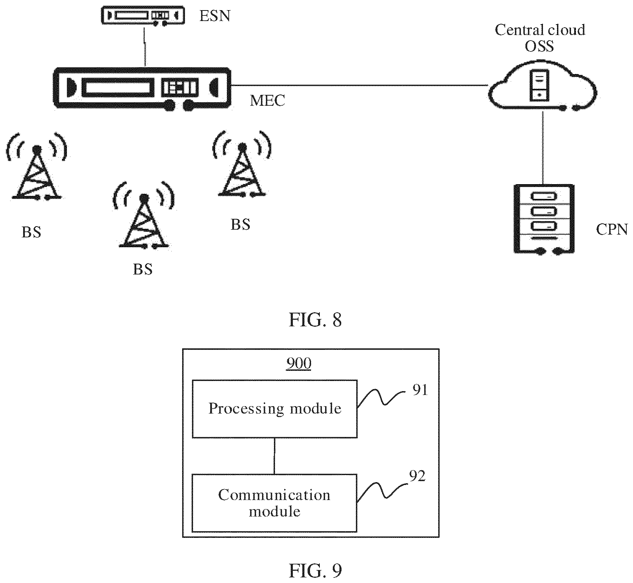

In another example, as shown in FIG. 8, a server of an MEC is connected to an edge sensing node (Edge Sensing Node, ESN). A connection between the ESN and the MEC is not necessarily cross-hardware. The ESN may be directly deployed on the server of the MEC, and the ESN may be displayed in a form of an App or a process. The ESN is responsible for collecting MRs, determining a traffic distribution result based on the collected MRs, and uploading the result to a central cloud OSS.

The traffic distribution result herein may include a traffic statistics result corresponding to a first grid in a first time period, traffic statistics results separately corresponding to a plurality of grids in a first time period, traffic statistics results corresponding to a first grid in a plurality of time periods, traffic statistics results separately corresponding to a plurality of grids in a plurality of time periods, or the like. Specific content of the traffic distribution result may be determined based on a specific requirement.

To implement functions in the methods provided in embodiments of this application, an embodiment of this application further provides an apparatus, configured to implement the methods. The apparatus may include a hardware structure and/or a software module, and implement the functions in a form of the hardware structure, the software module, or a combination of the hardware structure and the software module. Whether a specific function in the foregoing functions is performed by using the hardware structure, the software module, or the combination of the hardware structure and the software module depends on particular applications and design constraints of the technical solutions.

The apparatus provided in this embodiment of this application may be a chip or a circuit that can perform the functions corresponding to the methods. The chip or the circuit may be disposed in a device, for example, a processor. Further, the apparatus provided in this embodiment of this application may be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

The apparatus provided in this embodiment of this application may be divided into functional modules. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation.

In a possible implementation, FIG. 9 is a schematic diagram of a structure of an apparatus for determining a traffic statistics result according to an embodiment of this application. The apparatus may be a processor, or may be an apparatus in the processor. The apparatus 900 may include: a processing module 91 and a communication module 92. Certainly, the apparatus 900 may further include another module. This is not limited in this embodiment of this application. Only main functional modules are shown. The communication module 92 is configured to obtain a first data set, where the first data set includes a plurality of pieces of data collected within a first time period, and each piece of data includes a traffic measurement value and level measurement values of n beams. The processing module 91 is configured to: determine, based on the level measurement values of the n beams of each piece of data and center coordinates of a first grid, a second data set associated with the first grid in the first data set, and determine, based on a traffic measurement value included in each piece of data in the second data set, a traffic statistics result corresponding to the first grid in the first time period. The second data set includes data associated with the first grid in n-dimensional beam space in the first data set, a distance between level measurement values of n beams included in any piece of data in the second data set and the center coordinates of the first grid is less than or equal to a radius of the first grid, and the center coordinates of the first grid are represented by level values of n beams.

The processing module 91 in the apparatus 900 may support the apparatus 900 in performing actions of the first server in the foregoing method examples, for example, may support the apparatus 900 in performing step 402, step 403, and step 404 in FIG. 4, and step 502 and step 503 in FIG. 5.

The communication module 92 may support communication between the apparatus 900 and a device (for example, a base station or another server). For example, the communication module 92 may support the apparatus 900 in performing step 401 in FIG. 4 and step 501 in FIG. 5.

It should be understood that in this embodiment of this application, the processing module 91 may be implemented by a processor or a processor-related circuit component, and the communication module 92 may be implemented by a communication interface, a communication interface-related circuit component, or a communication interface. It should be understood that the communication interface may include, for example, a transmitter and a receiver. The processor, the transmitter, and the receiver are coupled to each other. The transmitter and the receiver are implemented, for example, by an antenna, a feeder, and a codec. Alternatively, if the apparatus is a chip disposed in a device, the transmitter and the receiver are, for example, a communication interface in the chip. The communication interface is connected to a radio frequency transceiver component in the device, to implement information receiving and sending through the radio frequency transceiver component.

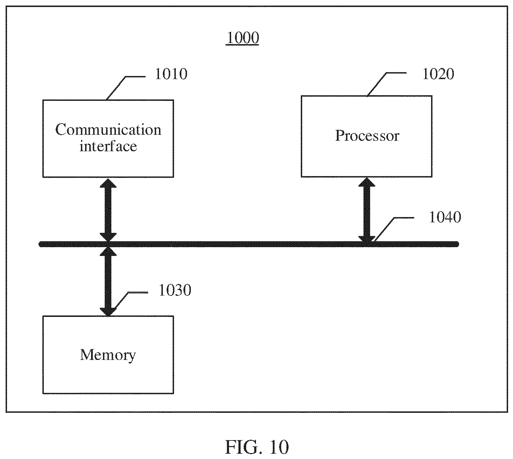

For example, FIG. 10 shows an apparatus 1000 according to an embodiment of this application. The apparatus shown in FIG. 10 may be an implementation of a hardware circuit of the apparatus shown in FIG. 9. The apparatus may be configured to perform functions of the first server in the flowchart shown in FIG. 5. For ease of description, FIG. 10 shows only main components of the apparatus.

It should be noted that the apparatus shown in FIG. 10 may be a chip or a circuit that can perform the functions corresponding to the foregoing methods, or may be a device including the chip or the circuit. This is not limited in this embodiment of this application.

The apparatus 1000 shown in FIG. 10 includes at least one processor 1020, configured to implement functions of the first server in FIG. 5 according to embodiments of this application.

The apparatus 1000 may further include at least one memory 1030, configured to store program instructions and/or data. The memory 1030 is coupled to the processor 1020. Couplings in embodiments of this application are indirect couplings or communication connections between apparatuses, units, or modules, may be in electrical, mechanical, or other forms, and are used for information exchange between the apparatuses, units, or modules. The processor 1020 may cooperate with the memory 1030. The processor 1020 may execute the program instructions stored in the memory 1030. At least one of the at least one memory may be included in the processor.

Optionally, if the apparatus 1000 is a chip or a circuit, the apparatus 1000 may alternatively not include the memory 1030. The processor 1020 may read instructions (program or code) in a memory outside the chip or the circuit, to implement functions of the first server provided in the embodiment shown in FIG. 5.

The apparatus 1000 may further include a communication interface 1010, configured to communicate with another device through a transmission medium, so that an apparatus in the apparatus 1000 can communicate with the another device. In this embodiment of this application, the communication interface may be a transceiver, a circuit, a bus, a module, or a communication interface of another type. In this embodiment of this application, the transceiver may be an independent receiver, an independent transmitter, a transceiver integrated with receiving and sending functions, or an interface circuit. The processor 1020 receives and sends data through the communication interface 1010, and is configured to implement functions of the first server in the embodiment shown in FIG. 5. For details, refer to the foregoing descriptions. Details are not described herein again.

The apparatus 1000 may further include a communication bus 1040. The communication interface 1010, the processor 1020, and the memory 1030 may be connected to each other through the communication bus 1040. The communication bus 1040 may be a peripheral component interconnect (peripheral component interconnect, PCI for short) bus, an extended industry standard architecture (extended industry standard architecture, EISA for short) bus, or the like. The communication bus 1040 may be classified into an address bus, a data bus, a control bus, and the like. For ease of representation, only one thick line is used to represent the bus in FIG. 10, but this does not mean that there is only one bus or only one type of bus.

In another optional manner, when apparatuses provided in embodiments of this application are implemented by using software, all or some of the apparatuses may be implemented in a form of a computer program product. The computer program product includes one or more computer instructions. When the computer program instructions are loaded and executed on a computer, the procedures or functions according to embodiments of this application are completely or partially implemented. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

It should be noted that the processor included in the apparatus configured to perform the methods provided in embodiments of this application may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. The processor may alternatively be a combination of processors implementing a computing function, for example, a combination of one or more microprocessors, or a combination of a DSP and a microprocessor.

Method or algorithm steps described in combination with embodiments of this application may be implemented by hardware, or may be implemented by a processor by executing software instructions. The software instructions may include a corresponding software module, and the software module may be stored in a random access memory (random access memory, RAM), a flash memory, a read-only memory (read-only memory, ROM), an erasable programmable read-only memory (erasable programmable read-only memory, EPROM), an electrically erasable programmable read-only memory (electrically erasable programmable read-only memory, EEPROM), a register, a hard disk, a removable hard disk, a compact disc read-only memory (compact disc read-only memory, CD-ROM), or any other form of storage medium well known in the art. For example, the storage medium is coupled to the processor, so that the processor can read information from the storage medium or write information into the storage medium. Certainly, the storage medium may alternatively be a component of the processor. The processor and the storage medium may be located in an ASIC. In addition, the ASIC may be located in a radar apparatus or a detection device on which the radar apparatus is installed. Certainly, the processor and the storage medium may alternatively exist in the radar apparatus or the detection device on which the radar apparatus is installed as discrete components.

It may be understood that FIG. 9 and FIG. 10 merely show simplified designs of the apparatus. During actual application, the apparatus provided in this embodiment of this application may include any quantities of transmitters, receivers, processors, controllers, memories, and other possible components.

The foregoing descriptions of the implementations allow a person skilled in the art to clearly understand that, for the purpose of convenient and brief description, division into the functional modules is merely used as an example for description. During actual application, the foregoing functions may be allocated to different functional modules for implementation as required. In other words, an inner structure of the apparatus is divided into different functional modules to implement all or some of the functions described above.

An embodiment of this application further provides a chip. The chip is connected to a memory, and is configured to read and execute a software program stored in the memory. When the software program is run on the chip, the chip is enabled to implement functions of the first server in FIG. 5.

An embodiment of this application further provides a computer-readable storage medium, including instructions. When the instructions are run on a computer, the computer is enabled to implement functions of the first server in FIG. 5.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specified function in one or more processes in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specified function in one or more processes in the flowcharts and/or in one or more blocks in the block diagrams.

These computer program instructions may alternatively be loaded onto a computer or another programmable data processing device, so that a series of operation steps are performed on the computer or the another programmable device, thereby generating computer-implemented processing. Therefore, the instructions executed on the computer or the another programmable device provide steps for implementing a specified function in one or more processes in the flowcharts and/or in one or more blocks in the block diagrams.

Clearly, a person skilled in the art can make various modifications and variations to this application without departing from the spirit and scope of this application. This application is intended to cover these modifications and variations of this application provided that they fall within the scope of protection defined by the claims of this application and their equivalent technologies.

**Claims**

1. A method for determining a traffic statistics result, wherein the method comprises:

    obtaining a first data set, wherein the first data set comprises a plurality of pieces of data collected within a first time period, each piece of data comprises a traffic measurement value and level measurement values of n beams, and the traffic measurement value comprises an uplink traffic measurement value and/or a downlink traffic measurement value;
    determining, based on the level measurement values of the n beams of each piece of data and center coordinates of a first grid, a second data set associated with the first grid in the first data set, wherein the center coordinates of the first grid are represented by level values of n beams; and
    determining, based on a traffic measurement value comprised in each piece of data in the second data set, uplink traffic or downlink traffic corresponding to the first grid in the first time period.

2. The method according to claim 1, further comprising:
    obtaining center coordinates and a radius that correspond to each of a plurality of grids in n-dimensional beam space, wherein the plurality of grids comprise the first grid.

3. The method according to claim 2, wherein the determining a second data set associated with the first grid in the first data set comprises:

    determining any piece of data in the first data set as data in the second data set when a distance between level measurement values of n beams comprised in the data and the center coordinates of the first grid is less than or equal to a radius of the first grid; or
    determining any piece of data in the first data set as data in the second data set when a distance between level measurement values of n beams comprised in the data and the center coordinates of the first grid is less than a distance between the level measurement values of the n beams and center coordinates of a grid other than the first grid in the plurality of grids.

4. The method according to claim 3, wherein the determining any piece of data in the first data set as data in the second data set when a distance between level measurement values of n beams comprised in the data and the center coordinates of the first grid is less than or equal to a radius of the first grid comprises:

    determining that the distance between the level measurement values of the n beams comprised in the any piece of data in the first data set and the center coordinates of the first grid is less than or equal to the radius of the first grid, and a distance between the level measurement values of the n beams comprised in the data and center coordinates of a second grid is less than or equal to a radius of the second grid, wherein the second grid is a grid other than the first grid in the plurality of grids; and
    determining the data as data in the second data set when the distance between the level measurement values of the n beams comprised in the data and the center coordinates of the first grid is less than the distance between the level measurement values of the n beams comprised in the data and the center coordinates of the second grid.

5. The method according to any one of claims 2 to 4, wherein the obtaining center coordinates corresponding to each of a plurality of grids in n-dimensional beam space comprises:

    obtaining a training data set, wherein the training data set comprises a plurality of samples, and each sample comprises level measurement values of n beams;
    obtaining, based on the level measurement values of the n beams corresponding to each of the plurality of samples, a distance set corresponding to the training data set, wherein the distance set corresponding to the training data set comprises a distance between any two groups of level measurement values of n beams in groups of level measurement values of n beams corresponding to the plurality of samples;
determining, based on the distance set corresponding to the training data set, a sample corresponding to each of the plurality of grids, wherein a distance between groups of level measurement values of n beams comprised in any two samples corresponding to each grid meets a preset distance condition; and
determining, based on the sample corresponding to each grid, the center coordinates corresponding to each grid, wherein the center coordinates of the first grid are determined based on a sample corresponding to the first grid.

6. The method according to any one of claims 2 to 4, wherein the obtaining center coordinates corresponding to each of a plurality of grids in n-dimensional beam space comprises:

obtaining a training data set, wherein the training data set comprises a plurality of samples, and each sample comprises a traffic measurement value and level measurement values of n beams;
obtaining, based on the level measurement values of the n beams corresponding to each of the plurality of samples, a distance set corresponding to the training data set, wherein the distance set corresponding to the training data set comprises a distance between any two groups of level measurement values of n beams in groups of level measurement values of n beams corresponding to the plurality of samples;
determining, based on the distance set corresponding to the training data set, a sample corresponding to each of a plurality of candidate grids, wherein a distance between groups of level measurement values of n beams comprised in any two samples corresponding to each candidate grid meets a preset distance condition;
determining, based on a traffic measurement value comprised in each sample corresponding to each candidate grid, a traffic statistics value corresponding to each of the plurality of candidate grids;
determining, based on the traffic statistics value corresponding to each of the plurality of candidate grids, candidate grids that meet a preset traffic condition, and using the candidate grids that meet the preset traffic condition as the plurality of grids in the n-dimensional beam space; and
determining, based on a sample corresponding to each of the plurality of grids, the center coordinates corresponding to each grid, wherein the center coordinates of the first grid are determined based on a sample corresponding to the first grid.

7. The method according to claim 6, wherein the traffic measurement value in each sample comprises an uplink traffic measurement value and/or a downlink traffic measurement value;

a traffic statistics value corresponding to the first grid comprises an uplink traffic statistics value corresponding to the first grid and/or a downlink traffic statistics value corresponding to the first grid;
the uplink traffic statistics value corresponding to the first grid is determined based on a sample that comprises an uplink traffic measurement value and that is in the sample corresponding to the first grid; and/or the downlink traffic statistics value corresponding to the first grid is determined based on a sample that comprises a downlink traffic measurement value and that is in the sample corresponding to the first grid; and
the first grid is any grid in the candidate grids that meet the preset traffic condition in the plurality of candidate grids, and that the traffic statistics value corresponding to the first grid meets the preset traffic condition means that the uplink traffic statistics value corresponding to the first grid is greater than or equal to a preset uplink traffic threshold, and/or the downlink traffic statistics value corresponding to the first grid is greater than or equal to a preset downlink traffic threshold.

8. The method according to claim 6, wherein the plurality of grids are an intersection of candidate grids corresponding to k1 uplink traffic statistics values and candidate grids corresponding to k2 downlink traffic statistics values;

a ratio of a sum of the k1 uplink traffic statistics values to a total uplink traffic statistics value is greater than or equal to a first threshold, and a ratio of a sum of the k2 downlink traffic statistics values to a total downlink traffic statistics value is greater than or equal to a second threshold, wherein k1 and k2 are positive integers;
the k1 uplink traffic statistics values are determined in descending order from uplink traffic statistics values corresponding to the plurality of candidate grids, and the k2 downlink traffic statistics values are determined in descending order from downlink traffic statistics values corresponding to the plurality of candidate grids, wherein total uplink traffic is a sum of uplink traffic measurement values comprised in the plurality of samples, and total downlink traffic is a sum of downlink traffic measurement values comprised in the plurality of samples;
the first grid is any grid in the candidate grids that meet the preset traffic condition in the plurality of candidate grids, and that a traffic statistics value corresponding to the first grid meets the preset traffic condition means that an uplink traffic statistics value corresponding to the first grid is one of the k1 uplink traffic statistics values, and a downlink traffic statistics value corresponding to the first grid is one of the k2 downlink traffic statistics values; and
the uplink traffic statistics value corresponding to the first grid is a sum of uplink traffic measurement values comprised in the sample corresponding to the first grid, and the downlink traffic statistics value corresponding to the first grid is a sum of downlink traffic values comprised in the sample corresponding to the first grid.

9. The method according to claim 6, wherein the plurality of grids are a union set of candidate grids corresponding to k1 uplink traffic statistics values and candidate grids corresponding to k2 downlink traffic statistics values;

a ratio of a sum of the k1 uplink traffic statistics values to a total uplink traffic statistics value is greater than or equal to a first threshold, and a ratio of a sum of the k2 downlink traffic statistics values to a total downlink traffic statistics value is greater than or equal to a second threshold, wherein k1 and k2 are positive integers;
the k1 uplink traffic statistics values are determined in descending order from uplink traffic statistics values corresponding to the plurality of candidate grids, and the k2 downlink traffic statistics values are determined in descending order from downlink traffic statistics values corresponding to the plurality of candidate grids, wherein total uplink traffic is a sum of uplink traffic measurement values comprised in the plurality of samples, and total downlink traffic is a sum of downlink traffic measurement values comprised in the plurality of samples;
the first grid is any grid in the candidate grids that meet the preset traffic condition in the plurality of candidate grids, and that a traffic statistics value corresponding to the first grid meets the preset traffic condition means that an uplink traffic statistics value corresponding to the first grid is one of the k1 uplink traffic statistics values, or a downlink traffic statistics value corresponding to the first grid is one of the k2 downlink traffic statistics values; and
the uplink traffic statistics value corresponding to the first grid is a sum of uplink traffic values comprised in the sample corresponding to the first grid, and the downlink traffic statistics value corresponding to the first grid is a sum of downlink traffic values comprised in the sample corresponding to the first grid.

10. The method according to any one of claims 5 to 9, wherein the center coordinates of the first grid are an average value of groups of level measurement values of n beams that is calculated based on level measurement values of n beams comprised in each sample corresponding to the first grid.

11. The method according to any one of claims 5 to 10, wherein the radius of the first grid is determined based on the center coordinates of the first grid and the level measurement values of the n beams comprised in each sample corresponding to the first grid.

12. The method according to claim 11, wherein the radius of the first grid is a largest distance in a radius set, and the radius set comprises a distance between level measurement values of n beams comprised in any sample corresponding to the first grid and the center coordinates of the first grid.

13. The method according to any one of claims 1 to 12, wherein the uplink traffic corresponding to the first grid in the first time period is determined based on data that is in the second data set and that comprises an uplink traffic measurement value; and
the downlink traffic corresponding to the first grid in the first time period is determined based on data that is in the second data set and that comprises a downlink traffic measurement value.

14. The method according to any one of claims 1 to 13, further comprising:
sending the uplink traffic or the downlink traffic corresponding to the first grid in the first time period to a server.

15. An apparatus for determining a traffic statistics result, wherein the apparatus comprises:

a transceiver unit, configured to obtain a first data set, wherein the first data set comprises a plurality of pieces of data collected within a first time period, each piece of data comprises a traffic measurement value and level measurement values of n beams, and the traffic measurement value comprises an uplink traffic measurement value and/or a downlink traffic measurement value; and
a processing unit, configured to: determine, based on the level measurement values of the n beams of each piece of data and center coordinates of a first grid, a second data set associated with the first grid in the first data set, wherein the center coordinates of the first grid are represented by level values of n beams; and determine, based on a traffic measurement value comprised in each piece of data in the second data set, uplink traffic or downlink traffic corresponding to the first grid in the first time period.

16. The apparatus according to claim 15, wherein the transceiver unit is further configured to obtain center coordinates and a radius that correspond to each of a plurality of grids in n-dimensional beam space, wherein the plurality of grids comprise the first grid.

17. The apparatus according to claim 16, wherein the processing unit is configured to: when determining the second data set associated with the first grid in the first data set, determine any piece of data in the first data set as data in the second data set when a distance between level measurement values of n beams comprised in the data and the center coordinates of the first grid is less than or equal to a radius of the first grid; or determine any piece of data in the first data set as data in the second data set when a distance between level measurement values of n beams comprised in the data and the center coordinates of the first grid is less than a distance between the level measurement values of the n beams and center coordinates of a grid other than the first grid in the plurality of grids.

18. The apparatus according to claim 17, wherein the processing unit is configured to: determine that the distance between the level measurement values of the n beams comprised in the any piece of data in the first data set and the center coordinates of the first grid is less than or equal to the radius of the first grid, and a distance between the level measurement values of the n beams comprised in the data and center coordinates of a second grid is less than or equal to a radius of the second grid, wherein the second grid is a grid other than the first grid in the plurality of grids; and determine the data as data in the second data set when the distance between the level measurement values of the n beams comprised in the data and the center coordinates of the first grid is less than the distance between the level measurement values of the n beams comprised in the data and the center coordinates of the second grid.

19. The apparatus according to any one of claims 15 to 18, wherein the transceiver unit is configured to obtain a training data set when obtaining the center coordinates corresponding to each of the plurality of grids in the n-dimensional beam space, wherein the training data set comprises a plurality of samples, and each sample comprises level measurement values of n beams; and
the processing unit is configured to: obtain, based on the level measurement values of the n beams corresponding to each of the plurality of samples, a distance set corresponding to the training data set, wherein the distance set corresponding to the training data set comprises a distance between any two groups of level measurement values of n beams in groups of level measurement values of n beams corresponding to the plurality of samples; determine, based on the distance set corresponding to the training data set, a sample corresponding to each of the plurality of grids, wherein a distance between groups of level measurement values of n beams comprised in any two samples corresponding to each grid meets a preset distance condition; and determine, based on the sample corresponding to each grid, the center coordinates corresponding to each grid, wherein the center coordinates of the first grid are determined based on a sample corresponding to the first grid.

20. The apparatus according to any one of claims 15 to 18, wherein the transceiver unit is configured to obtain a training data set when obtaining the center coordinates corresponding to each of the plurality of grids in the n-dimensional beam space, wherein the training data set comprises a plurality of samples, and each sample comprises a traffic measurement value and level measurement values of n beams; and
the processing unit is configured to: obtain, based on the level measurement values of the n beams corresponding to each of the plurality of samples, a distance set corresponding to the training data set, wherein the distance set corresponding to the training data set comprises a distance between any two groups of level measurement values of n beams in groups of level measurement values of n beams corresponding to the plurality of samples; determine, based on the distance set corresponding to the training data set, a sample corresponding to each of a plurality of candidate grids, wherein a distance between groups of level measurement values of n beams comprised in any two samples corresponding to each candidate grid meets a preset distance condition; determine, based on a traffic measurement value comprised in each sample corresponding to each candidate grid, a traffic statistics value corresponding to each of the plurality of candidate grids; determine, based on the traffic statistics value corresponding to each of the plurality of candidate grids, candidate grids that meet a preset traffic condition, and use the candidate grids that meet the preset traffic condition as the plurality of grids in the n-dimensional beam space; and determine, based on a sample corresponding to each of the plurality of grids, the center coordinates corresponding to each grid, wherein the center coordinates of the first grid are determined based on a sample corresponding to the first grid.

21. The apparatus according to claim 20, wherein the traffic measurement value in each sample comprises an uplink traffic measurement value and/or a downlink traffic measurement value;

a traffic statistics value corresponding to the first grid comprises an uplink traffic statistics value corresponding to the first grid and/or a downlink traffic statistics value corresponding to the first grid;

the uplink traffic statistics value corresponding to the first grid is determined based on a sample that comprises an uplink traffic measurement value and that is in the sample corresponding to the first grid; and/or the downlink traffic statistics value corresponding to the first grid is determined based on a sample that comprises a downlink traffic measurement value and that is in the sample corresponding to the first grid; and

the first grid is any grid in the candidate grids that meet the preset traffic condition in the plurality of candidate grids, and that the traffic statistics value corresponding to the first grid meets the preset traffic condition means that the uplink traffic statistics value corresponding to the first grid is greater than or equal to a preset uplink traffic threshold, and/or the downlink traffic statistics value corresponding to the first grid is greater than or equal to a preset downlink traffic threshold.

22. The apparatus according to claim 20, wherein the plurality of grids are an intersection of candidate grids corresponding to k1 uplink traffic statistics values and candidate grids corresponding to k2 downlink traffic statistics values;

a ratio of a sum of the k1 uplink traffic statistics values to a total uplink traffic statistics value is greater than or equal to a first threshold, and a ratio of a sum of the k2 downlink traffic statistics values to a total downlink traffic statistics value is greater than or equal to a second threshold, wherein k1 and k2 are positive integers;

the k1 uplink traffic statistics values are determined in descending order from uplink traffic statistics values corresponding to the plurality of candidate grids, and the k2 downlink traffic statistics values are determined in descending order from downlink traffic statistics values corresponding to the plurality of candidate grids, wherein total uplink traffic is a sum of uplink traffic measurement values comprised in the plurality of samples, and total downlink traffic is a sum of downlink traffic measurement values comprised in the plurality of samples;

the first grid is any grid in the candidate grids that meet the preset traffic condition in the plurality of candidate grids, and that a traffic statistics value corresponding to the first grid meets the preset traffic condition means that an uplink traffic statistics value corresponding to the first grid is one of the k1 uplink traffic statistics values, and a downlink traffic statistics value corresponding to the first grid is one of the k2 downlink traffic statistics values; and

the uplink traffic statistics value corresponding to the first grid is a sum of uplink traffic measurement values comprised in the sample corresponding to the first grid, and the downlink traffic statistics value corresponding to the first grid is a sum of downlink traffic values comprised in the sample corresponding to the first grid.

23. The apparatus according to claim 20, wherein the plurality of grids are a union set of candidate grids corresponding to k1 uplink traffic statistics values and candidate grids corresponding to k2 downlink traffic statistics values;

a ratio of a sum of the k1 uplink traffic statistics values to a total uplink traffic statistics value is greater than or equal to a first threshold, and a ratio of a sum of the k2 downlink traffic statistics values to a total downlink traffic statistics value is greater than or equal to a second threshold, wherein k1 and k2 are positive integers;

the k1 uplink traffic statistics values are determined in descending order from uplink traffic statistics values corresponding to the plurality of candidate grids, and the k2 downlink traffic statistics values are determined in descending order from downlink traffic statistics values corresponding to the plurality of candidate grids, wherein total uplink traffic is a sum of uplink traffic measurement values comprised in the plurality of samples, and total downlink traffic is a sum of downlink traffic measurement values comprised in the plurality of samples;

the first grid is any grid in the candidate grids that meet the preset traffic condition in the plurality of candidate grids, and that a traffic statistics value corresponding to the first grid meets the preset traffic condition means that an uplink traffic statistics value corresponding to the first grid is one of the k1 uplink traffic statistics values, or a downlink traffic statistics value corresponding to the first grid is one of the k2 downlink traffic statistics values; and

the uplink traffic statistics value corresponding to the first grid is a sum of uplink traffic values comprised in the sample corresponding to the first grid, and the downlink traffic statistics value corresponding to the first grid is a sum of downlink traffic values comprised in the sample corresponding to the first grid.

24. The apparatus according to any one of claims 19 to 23, wherein the center coordinates of the first grid are an average value of groups of level measurement values of n beams that is calculated based on level measurement values of n beams comprised in each sample corresponding to the first grid.

25. The apparatus according to any one of claims 19 to 24, wherein the radius of the first grid is determined based on the center coordinates of the first grid and the level measurement values of the n beams comprised in each sample corresponding to the first grid.

26. The apparatus according to claim 25, wherein the radius of the first grid is a largest distance in a radius set, and the radius set comprises a distance between level measurement values of n beams comprised in any sample corresponding to the first grid and the center coordinates of the first grid.

27. The apparatus according to any one of claims 15 to 26, wherein the uplink traffic corresponding to the first grid in the first time period is determined based on data that is in the second data set and that comprises an uplink traffic measurement value; and
the downlink traffic corresponding to the first grid in the first time period is determined based on data that is in the second data set and that comprises a downlink traffic measurement value.

28. The apparatus according to any one of claims 15 to 27, wherein the transceiver unit is configured to send the uplink traffic or the downlink traffic corresponding to the first grid in the first time period to a server.

29. An apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 14 by using a logic circuit or by executing code instructions.

30. A computer-readable storage medium, wherein the storage medium stores a computer program or instructions; and when the computer program or the instructions are executed by a communication apparatus, the method according to any one of claims 1 to 14 is implemented.

FIG. 1

FIG. 2

$$\left( \text{CELLID, TIME, RSRP1, RSRP2, } \cdots, \text{ RSRPn, ULTHP, DLTHP} \right)$$

FIG. 3

Step 401: A first server obtains a training data set, where the training data set includes M samples

Step 402: The first server obtains a first distance set based on the training data set, where the first distance set includes a distance between any two groups of level measurement values of n beams in groups of level measurement values of n beams separately included in the M samples

Step 403: The first server determines a grid index corresponding to each of the M samples

Step 404: The first server determines center coordinates and a radius of each grid

FIG. 4

Step 501: A first server obtains a first data set, where the first data set includes a plurality of pieces of data collected within a first time period, and each piece of data includes a traffic measurement value and level measurement values of n beams

Step 502: The first server determines, based on the level measurement values of the n beams of each piece of data and center coordinates of a first grid, a second data set associated with the first grid in the first data set

Step 503: The first server determines, based on a traffic measurement value included in each piece of data in the second data set, uplink traffic or downlink traffic corresponding to the first grid in the first time period

FIG. 5

FIG. 6

FIG. 7

FIG. 8

FIG. 9

1000

1010

Communication
interface

1020

Processor

1040

1030

Memory

FIG. 10

## INTERNATIONAL SEARCH REPORT

| International application No. |
| --- |
| **PCT/CN2022/092285** |

| A. | CLASSIFICATION OF SUBJECT MATTER |
| --- | --- |
| | H04W 24/00(2009.01)i |

According to International Patent Classification (IPC) or to both national classification and IPC

| B. | FIELDS SEARCHED |
| --- | --- |

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNTXT; ENTXT; WPABS; CNKI; 3GPP: 流量, 统计, 电平, 波束, 上行, 下行, 栅格, 中心, 坐标, 网络, flow, statistics, level, beam, uplink, downlink, grid, center, coordinates, network

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| A | CN 109150647 A (DATANG MOBILE COMMUNICATIONS EQUIPMENT CO., LTD.) 04 January 2019 (2019-01-04) <br> description, paragraphs 56-108 | 1-30 |
| A | CN 102932848 A (BEIJING TUOMING COMMUNICATION TECHNOLOGY CO., LTD.) 13 February 2013 (2013-02-13) <br> entire document | 1-30 |
| A | CN 106998556 A (BEIJING UNIVERSITY OF POSTS AND TELECOMMUNICATIONS) 01 August 2017 (2017-08-01) <br> entire document | 1-30 |
| A | CN 104244446 A (HUAWEI TECHNOLOGIES CO., LTD.) 24 December 2014 (2014-12-24) <br> entire document | 1-30 |
| A | CN 107580337 A (ZTE CORP.) 12 January 2018 (2018-01-12) <br> entire document | 1-30 |
| A | US 10652115 B1 (AMAZON TECHNOLOGY INC.) 12 May 2020 (2020-05-12) <br> entire document | 1-30 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 July 2022** | **28 July 2022** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2022/092285** |

| Patent document cited in search report | | | Publication date (day/month/year) | Patent family member(s) | Publication date (day/month/year) |
| --- | --- | --- | --- | --- | --- |
| CN | 109150647 | A | 04 January 2019 | None | |
| CN | 102932848 | A | 13 February 2013 | None | |
| CN | 106998556 | A | 01 August 2017 | None | |
| CN | 104244446 | A | 24 December 2014 | None | |
| CN | 107580337 | A | 12 January 2018 | None | |
| US | 10652115 | B1 | 12 May 2020 | None | |

Form PCT/ISA/210 (patent family annex) (January 2015)

# EP 4 319 245 A1

## REFERENCES CITED IN THE DESCRIPTION

**Patent documents cited in the description**

- CN 202110541055